(19) Europäisches Patentamt

European Patent Office

Office européen des brevets

(11) **EP 1 614 661 A1**

(12) **EUROPEAN PATENT APPLICATION**

(43) Date of publication:
11.01.2006 Bulletin 2006/02

(51) Int Cl.:
*C02F 1/44* (2006.01)    *B01D 61/02* (2006.01)
*B01D 61/06* (2006.01)

(21) Application number: 04425501.6

(22) Date of filing: 09.07.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **Saline Water Conversion Corporation, Riyadh - Olia**
**Riyadh 11432 (SA)**

(72) Inventor: **Hassan, Ata Mohammad**
**Riyadh 11432 (SA)**

(74) Representative: **Iannone, Carlo Luigi et al**
**Ing. Barzanò & Zanardo Roma S.p.A.**
**Via Piemonte, 26**
**00187 Roma (IT)**

Remarks:
A request for correction to exchange the drawings has been filed pursuant to Rule 88 EPC.A decsion on the request will be taken during the proceedings before the Examining Division ( Guidelines for Examination in the EPO, A-V, 3.)

(54) **An optimal high recovery, energy efficient dual fully integrated nanofiltration seawater reverse osmosis desalination process and equipment**

(57)    An optimal seawater reverse osmosis (SWRO) desalination process is disclosed, which combines two or more substantially different water pretreatment processes in a unique manner and in a special configuration, hereto unknown to prior desalination arts, to produce a high yield of high quality fresh water, including potable water. In this process a two stage NF membrane pretreatment unit ($NF_2$) with an energy recovery turbo charger (TC) device in between the stages is synergistically combined with at least one of two stage SWRO ($SWRO_2$) desalination unit with an energy recovery TC in between the stages to form a dual hybrid of $NF_2$ - $SWRO_2$ or alternatively the two stage $NF_2$ unit is synergistically combined with one stage SWRO unit utilizing high pressure tolerance SWRO membranes (up to 85 bar) with an energy recovery turbocharger in between the membranes assembly and high pressure pump or pressure exchanger (PX) energy recovery system. In a third arrangement the two stage NF unit is synergetically combined with one stage SWRO unit and with part of the SWRO reject recycles part of the SWRO reject as feed to the NF units. The SWRO unit itself is equipped with energy recovery TC or PX system which not only allows for lowering of energy consumption, but also the delivery of recycled SWRO reject, and blending it with seawater feed to the NF unit. In term of energy saving, the use of PX energy recovery system is much superior to that of TC by about 20 to 29%.

Fig. 1

**Description**

*Field of Invention*

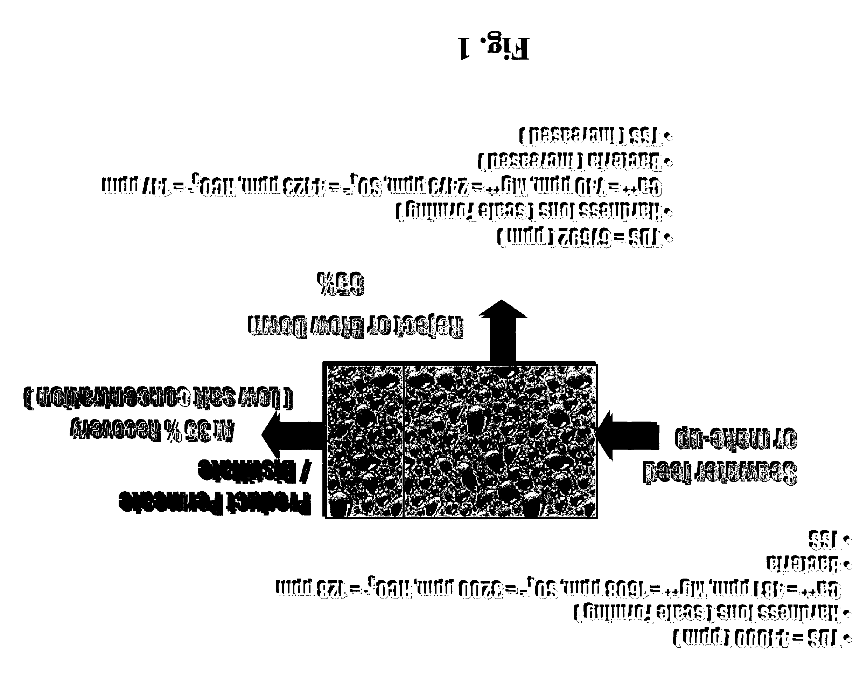

The invention deals with an optimal (the term optimal shall be used here-in-after to refer to this present optimal seawater desalination process of this invention) energy efficient $NF_2$-$SWRO_2$ or $NF_2$ - $SWRO_1$, see later discussion, process having the highest possible water recovery presently available from pretreated seawater feed or seawater beach well feed or other aqueous solution feed, where the feed is characterized by having high concentration of : (1) TDS in the order of 20,000 to 50,000 ppm, and (2) scale forming hardness ions (i.e., $SO_4^=$, $Ca^{++}$, $Mg^{++}$ and $HCO_3^-$) as shown in Table 1, as well as (3) it contains certain degree of turbidity and bacteria, especially if the feed is taken from an open seawater intake. This is achieved by having each of the dual NF-SWRO process and equipment fully integrated and each of the NF and SWRO units is operated in two, again fully integrated, consecutive stages to form an $NF_2$-$SWRO_2$ with energy recovery turbocharger in between the stages (see Fig. 1).

The NF unit, depending on type of NF membrane, is operated at a relatively low feed pressure (P) of P = 25 $\pm$ 10 bar at first NF stage and about 35 $\pm$ 10 bar at the second NF stage which is less than the pressure used to operate the SWRO unit in which the first stage SWRO is normally operated in conventional SWRO set-up at a P = 55 $\pm$ 10 bar, while second stage SWRO unit is operated utilizing the energy recovery turbocharger device to recover energy from reject and use it in boosting feed pressure to the second stage SWRO unit up to P $\approx$ 90 $\pm$ 10 bar, utilizing in this $2^{nd}$ stage the newly developed commercial high pressure tolerant SWRO membranes, Masaru Kurihara, et al, Desalination 125 (1999) 9-15) or equivalent high pressure SWRO membranes, newly developed by other membrane manufacturers.

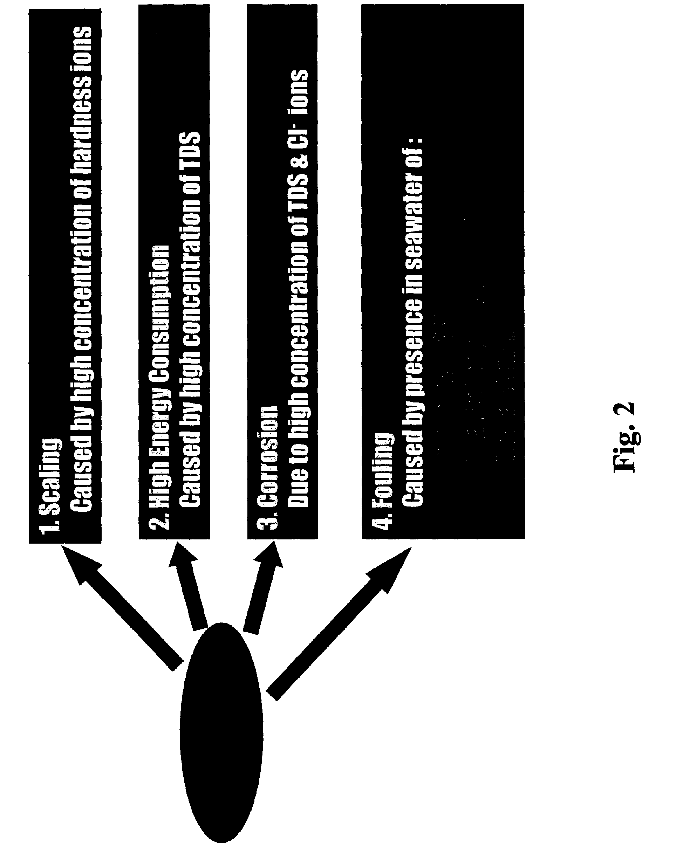

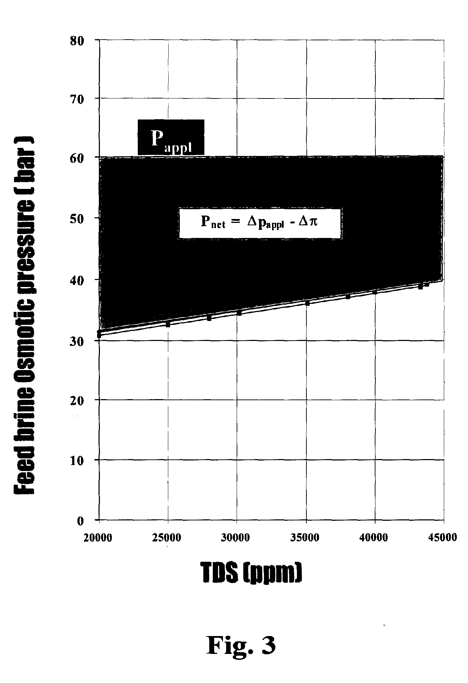

Alternatively, as shown in Figs. 2a and b, the SWRO unit is operated in one stage at high pressure, utilizing a high pressure tolerant membrane up to 84 bar, such as Toyobo HB type membrane, (Goto, T., et al, progress in SWRO technology, The International D&WR IDA Quarterly, 2001, Vol. II/ p. 31-36),. Still, a third configuration, a dual desalination system operation of NF membrane assembly (2 stages) -SWRO (1-stage), with recycling and blending of one part of SWRO reject with seawater feed to NF unit, and operation of the SWRO unit at about P= 65 $\pm$ 5 bar (Figs. 3a and b). The recycled SWRO reject although high in salinity, however, its content of hardness ions especially the coanions of $SO_4^=$ is drastically reduced to a very small fraction of that in seawater. Through this optimal process, for example, the normal SWRO membrane recovery from the conventional single SWRO process of about 25 to 35% as applied to Gulf Sea or Red Sea water (TDS $\approx$ 45,000 ppm) can be raised to 56-70% or better. This equipment arrangement and the dihybrid $NF_2$-$SWRO_2$ or $NF_2$ - $SWRO_1$ processes yield an overall combined water recovery ratio from the NF and SWRO units, for example from Gulf seawater, in the order of 53% or better (up to 57%) (Figs.1, 2,3) rising to about 60% or better from a trihybrid of NF-SWRO-thermal when the reject from SWRO is made make-up to a thermal unit linked to it, compared to only 25 to 35% by the conventional single SWRO desalination process whether membrane or thermal type , for an increase in water recovery in the range of 50% - 100%. This recovery is also greater than that from our previously developed, the fully integrated NF-SWRO or NF-thermal processes, where each of the NF and SWRO consists of one single stage only without energy recovery system, Hassan A.M., U.S. Patent 6,508,936, January 21, 2003. By this optimal seawater desalination process, each of the energy requirement and water production cost per unit water is reduced by better than 30%.

*Description of the Prior Art*

Many countries have considered desalination of saline water, especially seawater, as a source of fresh water for their arid coastal regions or for regions where water sources are brackish or have excessive hardness. Typical areas where desalination has been considered or is in use include Gulf countries and other Middle Eastern countries: Southern California in the United States; Mediterranean Arab countries of Libya, Algeria and Egypt; Europe mainly Spain, Malta and Cyprus; Mexico and the Pacific coast countries of South America. Similarly, islands with limited fresh water supplies, such as Malta, the Canary Islands and the Caribbean Islands, also use and are considering desalination of seawater as a fresh water source. Fresh water from the sea now represents over 70% of drinking water in Saudi Arabia, United Arab Emirate. Nearly 100% of drinking water in both Kuwait and Qatar is derived from desalinated seawater.

The conventional SWRO commercial desalination processes consisted of feed pretreatment to remove turbidity, mainly suspended matter and bacteria and the addition of antiscalant, normally acid followed by passing this pretreated feed at high pressure, 55-82 bar (800 to 1200 psi), to separate the feed stream into a product (permeate) and reject (concentrate). In many of the older SWRO plants, a separate second stage brackish water RO unit is included to bring down the salinity of the product from the first stage SWRO unit to drinking water salinity standards. This conventional process, which is in use in many of the early built plants (up to mid nineties) however, has high energy requirements per unit of desalinated water product and have been operated at relatively low yield, typically from Gulf seawater from 25% with two stage SWRO unit to 35% with one stage SWRO or less based on feed. They have, therefore, been economical only for those locations where fresh water shortages are acute and energy is available and its cost is considered (although artificially) low. This is also true of thermal processes such as MSFD and MED. While desalination plants have also been used in other areas such as California, the use has generally been in times of drought or as standby or supplemental sources of fresh water when other sources are temporarily limited or unavailable. In many locations, where natural water resources are moderately available, current desalination processes cannot compete effectively with other sources of fresh water, such as overland pipelines or aqueducts from distant rivers and reservoirs such as in Southern California.

However, because there is a vast volume of water present in the oceans and seas, and because direct sources of fresh water (such as inland rivers, lakes and underground aquifers) are becoming depleted, contaminated or reaching capacity limits, all those factors combined with the increase in world population without a major increase in natural water resources such as the case in Middle East countries, especially GCC Gulf countries, there is an extensive research underway through the world for an economical process for desalination of saline water, and especially of seawater. Indeed, this approach is developing into the ultimate goal for satisfying the rising water demand for many countries with acute water shortages now or in future and, in a way is considered as a major and blessing cause for bringing peace among nations, which otherwise will have major disputes over the limited water resources exists within their borders.

As mentioned earlier, available and in use now are several commercial seawater desalination processes. The thermal multistage flash distillation is one of the two major desalination processes now used worldwide. Alone, it accounts for about 41% of total world desalination capacity as compared to about 44% produced by the reverse osmosis (RO) process. The rest (15%) is produced by a variety of processes, primarily electrodialysis (ED), multiple effect distillation (MED) and vapor compression distillation (VCD); Wangnick Klaus, 2000 IDA World Desalting Plants Inventory, Report No. 16, International Desalination Association (May 2000) . Saudi Arabia is the leading user of MSFD and the United States is the largest user of the RO process. All MSFD, MED and VCD processes are used exclusively in seawater desalination, while ED is applied mostly in brackish water desalination and pure water preparation. The RO process, however, is a multi saline water desalination process. It is applied to both seawater and brackish water feed but in the past its application was primarily in brackish water, drinking water and in pure water preparation. More recently, however, SWRO desalination has become more common and used worldwide utilizing relatively large plants of 10 or over 15 million gallon/day (mgd) [39-57 million liter/day (mld)] plants.

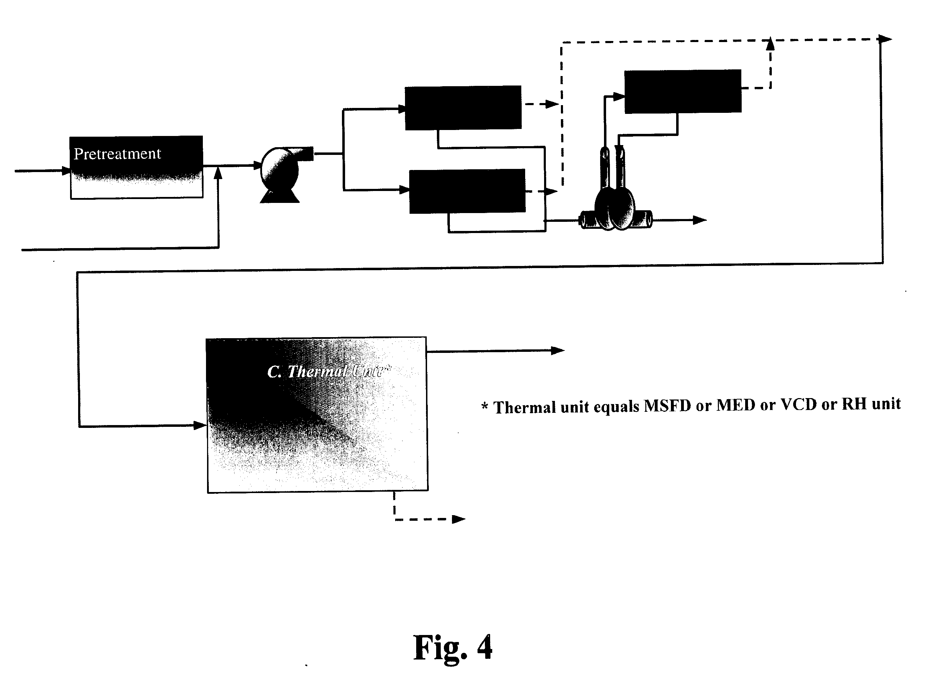

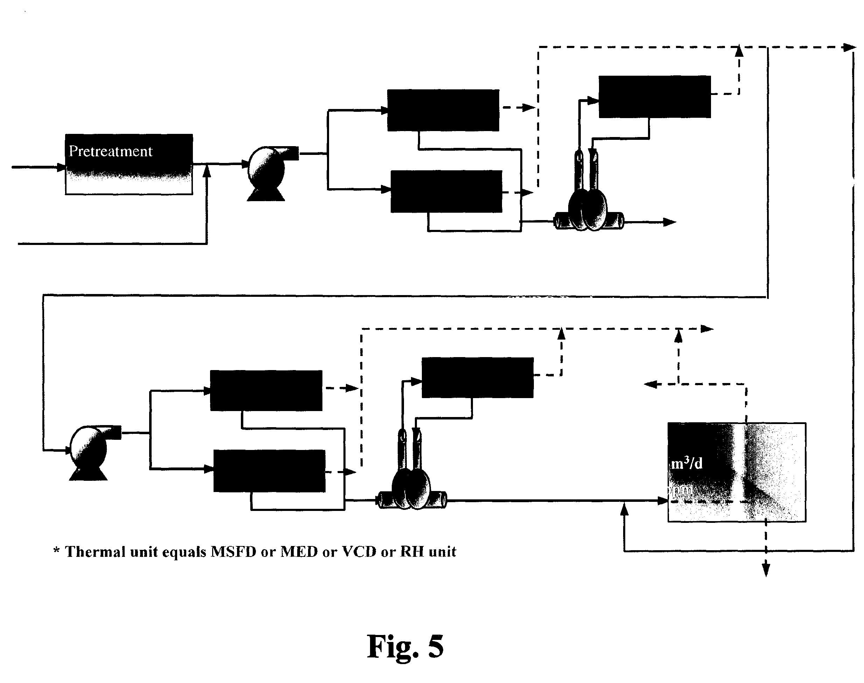

Desalination of seawater must take into account important properties of the seawater itself: (1) type, concentration and total hardness ions, (2) salinity (ionic content and total dissolved solids (TDS)) and (3) turbidity, the presence of suspended particulates and microorganisms as well as other large particles. These properties interfere with desalination system and determine plant performance (product: yield, recovery and quality). In particular, scale forming hardness ions and their coanions, which are sparingly soluble, place limits, for example, of 25%-35% or less on the amount of fresh water yield that can be expected from prior art seawater desalination processes, for example, from Gulf and Red Sea seawater. As represented in Figure 4, seawater desalination processes whether membrane or thermal are separation concentration processes leading to separation of the feed stream into a clean fresh water product stream of potable water qualities and a reject stream having high concentration of pollutants; TDS and hardness ions. This separation/concentration process is the cause leading to the four major problems encountered into the seawater desalination processes. These are summarized with their causes in Figure 5: (1) scaling, (2) high energy consumption, (3) fouling (4) corrosion enhancement. Because of the hardness ions very low solubility, and the fact that $CaSO_4$ solubility decreases with rise in process temperature, the increase in hardness ion concentration in the brine, places severe limit on desalinated water recovery (25 to 35% or less from Gulf seawater, TDS $\approx$ 45,000 ppm) from the various conventional seawater desalination processes whether thermal or membrane type.

Reference is made in this application to "saline" water, which includes seawater from seas, e.g., Gulf; Red Sea, Mediterranean and Oceans, water from various salt lakes and ponds, high brackish water sources, brines, and other surface and subterranean sources of water having ionic contents, which classify them as "saline" as shown in Table 1. This can generally be considered to be water with a salt content of ≥20,000 parts per million (ppm) or greater. Since of course seawater has the greatest potential as a source of potable water, this application will focus on seawater desalination. However, it will be understood that all sources of high salinity, especially high hardness, saline water are to be considered to be within the present invention, and that focus on seawater is for brevity and not to be considered to be limiting.

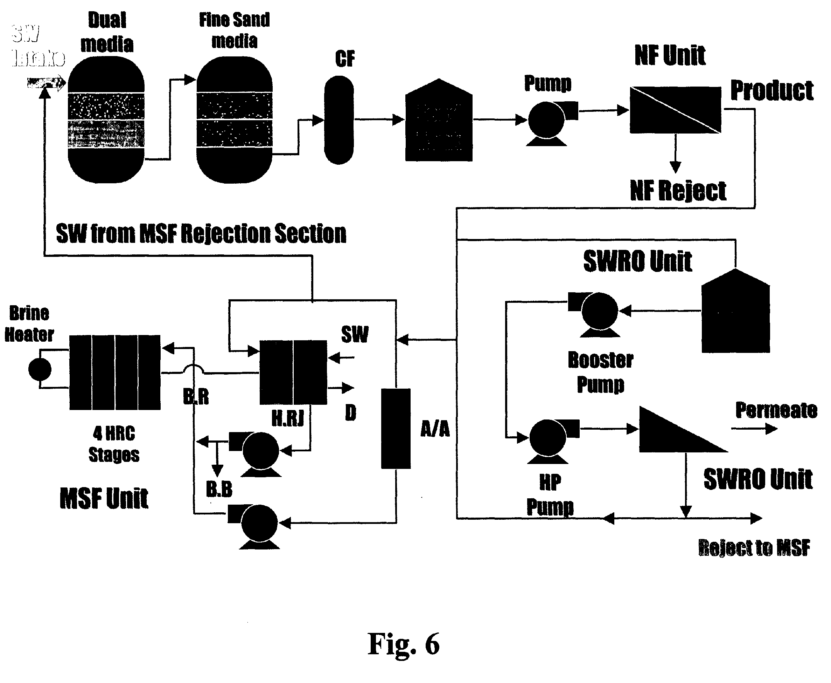

The performance and product recovery of seawater desalination plants (thermal and SWRO plants), as mentioned earlier, are severely limited by the three previously mentioned problems, which are all related to seawater quality and its material contents: (1) turbidity, (2) TDS and (3) total hardness ions in the water feed. Turbidity when present in feed is caught especially on the membrane, which could lead to membrane fouling. Biofouling occurs when bacteria is also present with turbidity in the feed, i.e., suspended solids, which provides feed to bacteria. In RO the feed osmotic pressure increases with the TDS. From the principles of RO the applied pressure is (1) partially and necessarily used to overcome the osmotic pressure and (2) only the remaining part of this applied pressure, which is the net pressure ($P_{net}$) driving the permeate (product) through the membrane. The lower the osmotic pressure can be made by reducing feed TDS, the greater the net water driving pressure, and therefore the greater the amount of pressure available to drive the permeate water through the membrane (Figure 6), which also has the added advantage of producing a higher quantity of product of higher quality.

**Table 1. Typical compositions of Gulf Water, Ocean Seawater and other seas seawater**

| Constituents | Gulf Seawater | Mediterranean | Ocean Seawater | North Sea |
|---|---|---|---|---|
| **Cations (ppm)** | | | | |
| Sodium, $Na^+$ | 13,440 | 11,660 | 10,780 | 5,973 |
| Potassium, $K^+$ | 483 | 419 | 386 | 200 |
| Calcium, $Ca^{++}$ | 508 | 441 | 408 | 232 |
| Magnesium, $Mg^{++}$ | 1618 | 1,404 | 1,297 | 738 |
| Copper, $Cu^{++}$ | 0.004 | - | - | - |
| Iron, $Fe^{+++}$ | 0.008 | - | - | - |
| Strontium, $Sr^{++}$ | 1 | - | 1 | - |
| Boron, $B^{+++}$ | 3 | - | 0 | - |
| **Anions (ppm)** | | | | |
| Chloride, $Cl^-$ | 24,090 | 20,900 | 19,360 | 11,000 |
| Sulfate, $SO_4^=$ | 3,384 | 2,936 | 2,702 | 1,545 |
| Bicarbonate, $HCO_3^-$ | 176 | 153 | 143 | 80 |
| Carbonate, $CO_3^=$ | -- | - | - | - |
| Bromide, $Br^-$ | 83 | 72 | 66 | 38 |
| Fluoride, $F^-$ | 1 | - | 1.3 | - |
| Silica, $SiO_2$ | 0.09 | - | - | - |
| **Other Parameters** | | | | |
| Conductivity | 62,000 | - | - | - |
| pH | 8.1 | - | 8.1 | - |
| Dissolved oxygen (ppm) | 7 | - | 6.6 | - |
| $CO_2$ | 2.1 | - | 2 | - |
| Total Suspended Solids (ppm) | 20 | $\geq 20$ | $\geq 20$ | $\geq 20$ |
| Total Dissolved Solids (ppm) | 43,800 | 38,000 | 35,146 | 20,000 |
| Total Bacteria count | Variable | Variable | Variable | Variable |

High level of the sparingly soluble hardness ions in the feed has the greatest damage by limiting the fresh water recovery, since rise in recovery beyond the hardness ions solubility limits leads to the formation of the more of a disastrous scaling effect, with a precipitous decline in plant performance.

In summary, the seawater desalination plant scaling along with their high energy requirements and fouling constitute the three major problems in seawater desalination. Corrosion is the fourth major problems in seawater desalination and its formation is enhanced by the high salinity and high chloride content in seawater. Principal and main objectives of this invention are in developing an efficient, seawater desalination process and method which not only overcome those problems, but leads to establishing an optimal, high efficiency seawater desalination process and equipment.

Raising of the SWRO plant water recovery ratio should lead to a reduction in unit water production cost, because this unit cost is figured out by dividing the total water production cost by the quantity of product. The larger is the water recovery ratio the greater is the quantity of product and simply the lower is the unit water cost. In a water cost strategy meeting of the main Japanese desalination experts (Scientists and Engineers) held at the Water Reuse and Promotion Center, Japan, it was concluded that the optimum reduction in water production cost can be realized, from ocean water feed to SWRO plants (TDS = 35,000 ppm), at the SWRO water recovery ratio of 60% (i.e., SWRO reject TDS = 88,000 ppm, and in order to maintain this TDS value in SWRO reject of Gulf seawater (TDS ≈ 45,000 ppm) the corresponding optimum water recovery ratio value from Gulf seawater should not exceed 48%. High water recovery ratio could lead to the disastrous deposition of calcium sulfate on membrane, besides the gain in water cost reduction due to increase in water recovery is cancelled by the increase in cost of applied pressure required to overcome the very high rise in osmotic pressure (see earlier reference under Goto, et al). Because of the removal of the hardness scale forming ions and the reduction in feed TDS caused by the present $NF_2$-$SWRO_2$ invention, much higher SWRO recovery can be obtained by the combination of NF (2 stages) with two stages or one stage high pressure SWRO operation. Raising of SWRO recovery by this invention is, as mentioned earlier, a major advantage of the present system. Through this development, I am striving to develop an optimal dual $NF_2$-$SWRO_2$ desalination method or $NF_2$-SWRO 1 stage (Figs. 1, 2 and 3) that exceed in efficiency and water recovery ratio all prior art methods, and definitely should allow for lifting of the optimum SWRO water recovery ratio from ocean feed up to 80% or better.

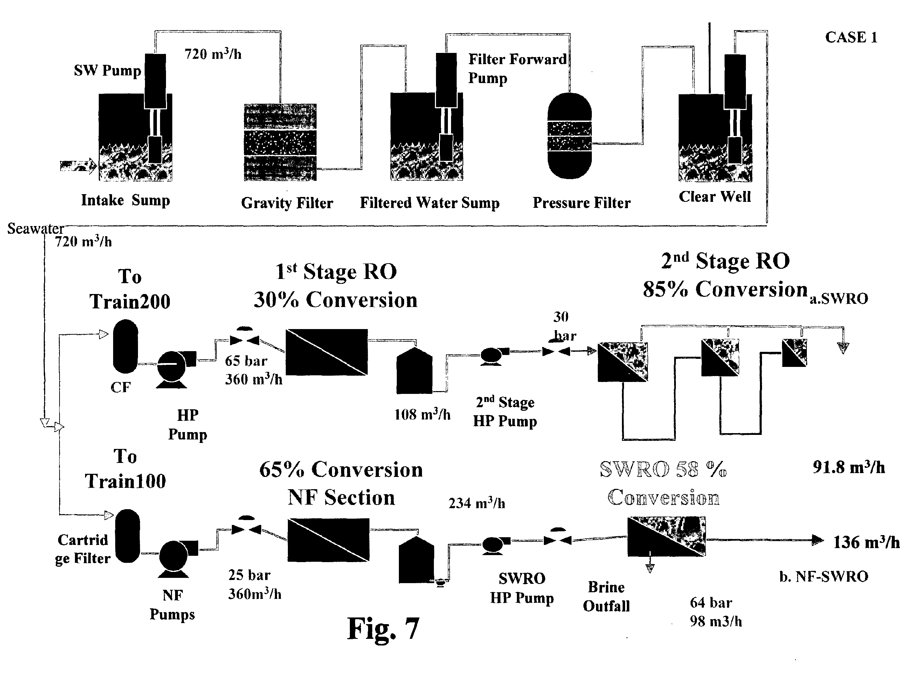

The above remarks are vividly illustrated in Fig. 7 where product water recovery of 80% was achieved at the pressure of 70 bar. Both the product flow and water recovery from SWRO unit operated on NF product are double those obtained under same operating conditions from same SWRO pilot plant when it was operated on seawater feed without NF pretreatment. Permeate starts to flow at an applied pressure of about 15 bar and some times less when the SWRO unit feed consists of NF product as compared to double this value when the feed to SWRO unit consists of seawater (Fig. 7). Additionally, the product water quality is far superior when the SWRO unit is operated on NF product than when it is operated on seawater, where in the latter case unlike in the former case, the product water requires further treatment through brackish RO unit to bring its quality to drinking water standards.

This process is equally applicable to conventional thermal seawater desalination processes, which is discussed elsewhere in a separate patent application, by the formation of the following hybrids:

$$NF_{(2\ stages)} - thermal, \ and \ NF_2 - SWRO_{2\ reject} - thermal,$$

where the reject from the NF product feed SWRO unit of one or two stages, constitutes the make-up to the thermal unit of MSFD or MED or VCD or RH unit. This is another major advantage of the present $NF_2$ - $SWRO_2$ invention wherein in the SWRO reject is very low in hardness and thus can be utilized as already demonstrated as make-up to thermal plants without use of antiscalant, US 6,508,936, January 2003.

In the past, various types of filtration or coagulation-filtration systems have been used for treatment of water and other liquid solutions and suspensions for removal of particulate matter (Table 2). Addition of antiscalant is utilized to assist in preventing formation of scale and, therefore, the lifting and raising, up to a limit, of the water recovery ratio. But in spite of this conventional pretreatment to remove turbidity and addition of antiscalant, fresh water recovery ratio is still limited for example in conventional desalination of Gulf SWRO to 25-35% or less.

**Table 2. Pretreatment and Quality Requirements of SWRO Plants Feed Taken from an Open Sea (Surface) Intake**

| Seawater Characteristics | SWRO |
|---|---|
| High turbidity (TSS, bacteria, etc.) | Requires complete removal and/or disinfection |
| High degree of hardness of ($Ca^{++}$, $Mg^{++}$, $SO_4^=$, $HCO_3^-$) | Requires (all seawater desalination plants, membr/ane other thermal): <br>♦ Removal or <br>♦ Inhibition of precipitation by: <br>- addition of antiscalant and <br>- operation at correct condition |
| High TDS | Lowering of TDS <br>♦ Lowers energy wasted to overcome osmotic pressure <br>♦ Lowers hardness content of feed <br>♦ Increases recovery ratio <br>♦ Lowers energy requirement/$m^3$ <br>♦ Lowers cost /$m^3$ |

In a more recent approach in removal of fine particles with sizes less than 2 micrometer ($\mu$m), microfiltration (MF) or ultrafiltration (UF) are used. The low pressure reverse osmosis (LPRO) or brackish water RO (BWRO) membranes (see below) were employed also ahead of the SWRO pretreatment. The MF membrane pretreatment is used to remove particles having sizes in the range of 0.08-2.0 $\mu$m. The UF membrane process is more effective for the removal of finer particles having sizes in the range of 0.01-0.2 $\mu$m and of molecular weight (MW) in the range of 10,000 g/mole and above. Both the MF and UF membrane processes are true filtration processes, where particle separation is done only according to particle size and not according to its ionic characteristics. Moreover, each of the MF and UF membranes has its own characteristic pore size and separation limits. These two membrane filtration processes are effective in keeping the feed clean by their removal of turbidity and bacteria, and as such, they are very effective pretreatment process for the prevention during plant operation of membrane fouling including biofouling. The MF and UF filtration pretreatment processes differ significantly from the RO pretreatment process. Unlike the filtration by the MF and UF membrane processes, which, as already mentioned, do not separate or reject ions from their solution or seawater, the RO process, is a differential pressure process for separation of all ionic particles with sizes of 0.001 $\mu$m or less and molecular weights of 200 g/mole or less. Moreover, those very tight structure SWRO membranes require high pressure operation in the order of 50 to 80 bar, compared to only a low pressure operation of about 5-10 bars for MF and UF processes.

By comparison to other membrane separation processes, the NF membrane process falls in between the RO and UF separation range, and is suited for the separation of particle sizes in the range of 0.01-0.001 $\mu$m and molecular weights of 200 g/mole and above. Unlike either UF or RO, however, NF acts by three principles: rejection of neutral particles according to size and rejection of ionic matter by electrostatic interaction with a negatively charged membrane; Rautenbach et al., *Desalination,* 77: 73-84 (1990). Thirdly, the NF membrane operation is also partially governed by the osmotic principle. For this reason, as shown in later sections, the NF membranes differ from RO, which rejects all ions, covalent or monovalent, more or less, to the same degree, in that the NF has a much greater rejection to covalent and trivalent ions such as the scale forming hardness ions of $SO_4^=$, $HCO_3^-$, $Ca^{++}$ and $Mg^{++}$ than their rejection of monovalent ions of $Na^+$, $Cl^-$, etc. NF has been used in Florida for treatment of brackish hard water to produce water of drinking water standards. The NF process has also been used for removal of color turbidly, and dissolved organics from drinking water; Duran et al., *Desalination,* **102**:27-34 (1995) and Fu et al., *Desalination,* **102***:* 47-56 (1995). NF has been used in other applications to treat salt solution and landfill leachate; Linde et al.. *Desalination,* **103**:223-232 (1995); removal of sulfate from sea water to be injected in off-shore oil well reservoirs; Ikeda et al., *Desalination,* **68**:109 (1988); Aksia Serch Baker, *Filtration and Separation* (June, 1997). As shown below, the NF seawater membrane pretreatment is done at much lower pressure, typically 10 to 25 bars, than the SWRO membrane operation (typically 55-82 bar, i.e., 800 to 1200 psi).

In addition to the above uses of the NF process, it was also utilized in a variety of seawater and aqueous solution treatment. As mentioned above, an NF membrane US Pat. No. 4,723,603, was employed in removal of sulfate from seawater, which still high in sodium chloride content, was used in making drilling mud in off-shore drilling, preventing through this process barium sulfate scaling. US Patent No. 5,458, 781 describes an NF separation of aqueous solutions containing bromide and one or more polyvalent anions into two streams: a stream enriched in bromide and a second stream enriched in polyvalent anions. It was suggested but never was done that the bromide-enriched stream is to be further treated by RO for bromide concentration for use in industrial application. EPO Publication No. 09141260, 03,06,97 proposed problem solving "to improve the concentration rate while suppressing precipitation of scale by passing seawater through three flat membrane cells of nanofilter (NF membrane) of polyvinyl alcohol polyamide to remove sulfate ion and then passing the filtered water through RO membrane to remove $SO_4^=$ (not much detail of the work, however, is given).

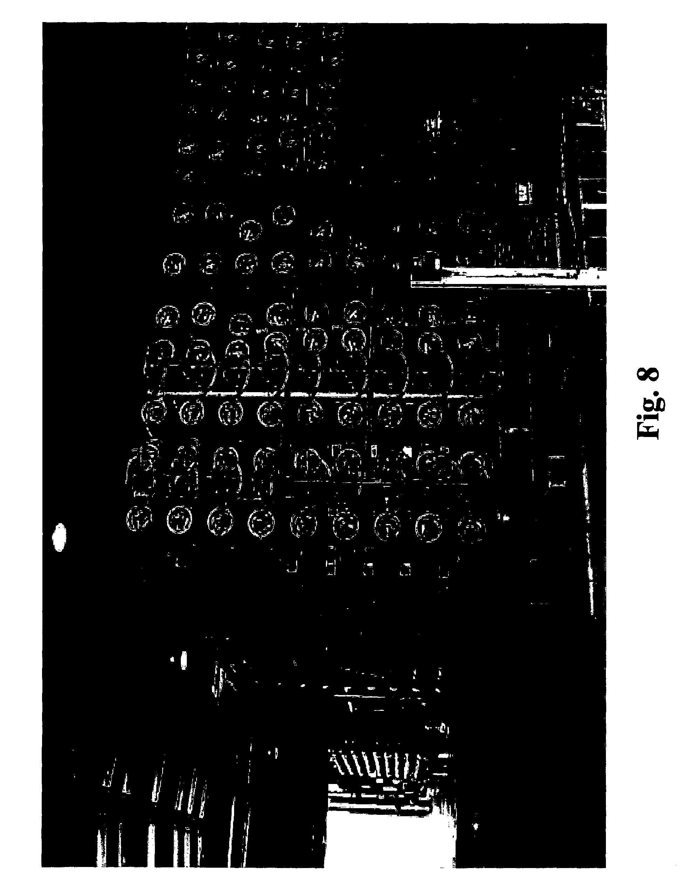

But as shown in Figure 8 it was Hassan, A.M., in the US Patent 6,508,936 who was the first to apply the NF pretreatment to SWRO and other seawater thermal (MSFD, MED, VCD) desalination processes, first at the pilot plant and demonstration desalination plant stage; Hassan et al, Desalination and Water Reuse Quarterly May-June Issue (1998) Vol. **8/1,** 54-59, also September-October Issue (1998), Vol. **8/2,** 35-45: also Desalination **118** (1998) 35-51; Desalination **131** (2000), 157-171: IDA World Congress on Desalination and Water Reuse (San Diego) Proceedings (1999) (Paper received Top IDA Award on thermal Desalination) plus many other publications.

This above new NF-SWRO desalination process, which was first developed at the pilot plant, and proved successful in overcoming the previously mentioned major problems in conventional seawater desalination processes by: (1) preventing SWRO membrane fouling, (2) prevented plant scaling and (3) increased significantly plant productivity, both yield and recovery and improved SWRO product quality as well as it lowers both energy requirement and cost per unit water product. Similar advantages were gained by combining an NF membrane unit with thermal desalination MSFD unit in a dual hybrid desalination unit as shown in Figure 8 Because of the removal of hardness from the reject in SWRO unit which is fed NF product, again as shown in same figure, the SWRO reject was used successfully as make-up feed to the MSFD unit. In both the dual NF-MSF hybrid and the trihybrid of NF-SWRO$_{reject}$-MSF, the MSF unit was operated for the first time ever at top brine temperature (TBT) of 120°C, also later at higher TBT of up to 130°C without antiscalant at high yield (see references in previous paragraph.).

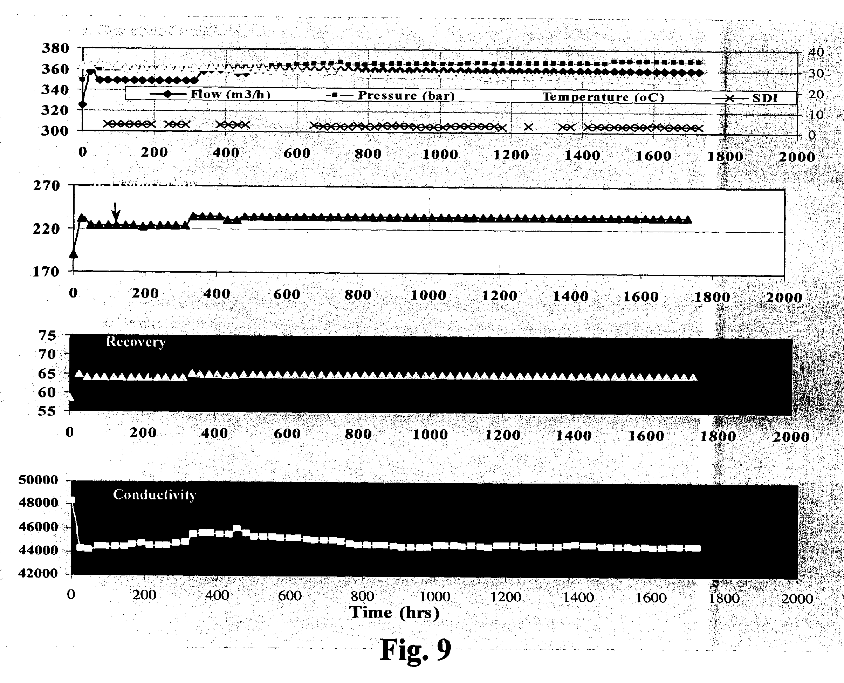

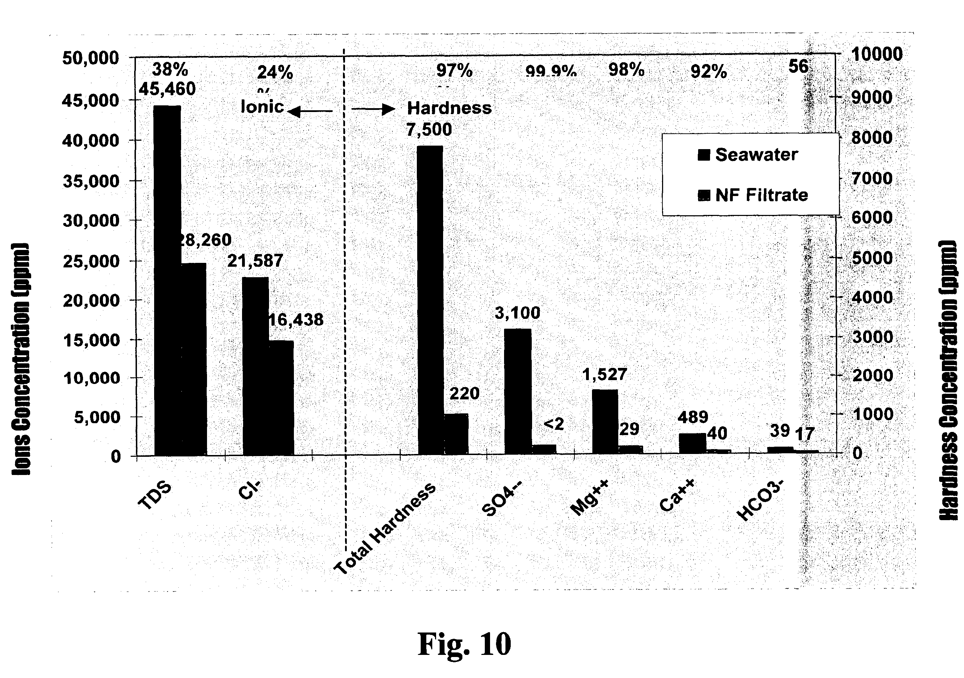

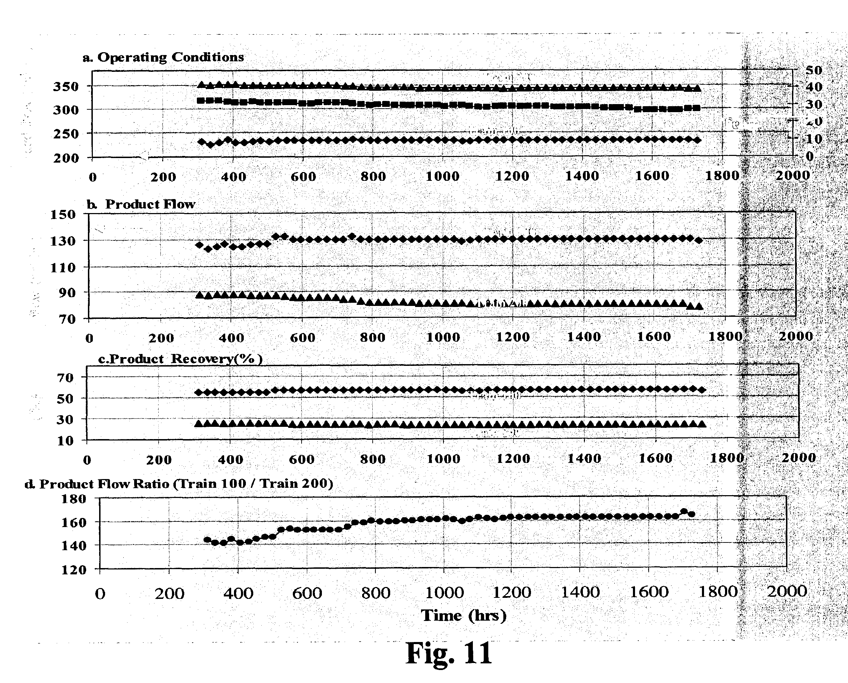

This dual NF-SWRO desalination process was further applied as shown in Figure 9 on a commercial plant scale, one SWRO Train 100, capacity 2203 m³/d (582,085 gpd) at the existing Umm Lujj SWRO plant, which was commissioned in 1986. The plant was converted from a single SWRO desalination process to the new dual NF-SWRO desalination process by the introduction of an NF pretreatment and semidesalination unit ahead of the existing SWRO unit, see photo Figure 10. The second Line, Train 200, at the same plant, which is identical in design and production to Train 100, was kept operational in the single SWRO mode. In order to establish the operating parameter for a large NF-SWRO plant Prior to the conversion of the plant to the dual NF-SWRO process, the process was tested utilizing a demonstration unit simulating the new NF-SWRO plant in design and operation. From the results of this trial, the NF recovery in the NF-SWRO was fixed at 65% (Figure 11) and later operated successfully at a demonstration mobile pilot unit for over two months at NF product recovery of 70%; Hassan, A.M., et al., IDA World Congress on Desalination Proceedings (Bahrain), Oct. 2001, see Abstract, p. 193-194.

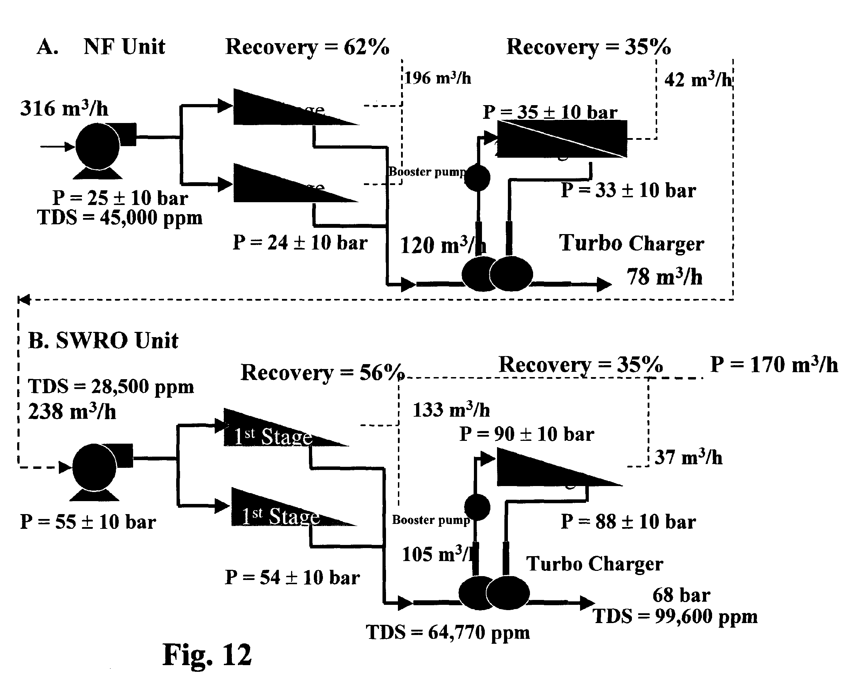

The NF unit of Train 100 ionic rejection for the scale forming hardness ions of $SO_4^=$, $Mg^{++}$, $Ca^{++}$, $HCO_3^-$, and total hardness were : 99.9% , 98%, 92%, 56% and 97%, respectively, Figure 12. This very high rejection of hardness ions compares to a rejection of only 24% for the monovalent $Cl^-$ ion, and 38% rejection of TDS ions, where the seawater feed TDS of about 45,460 was reduced to 28,260 in the NF product (Figure 12).

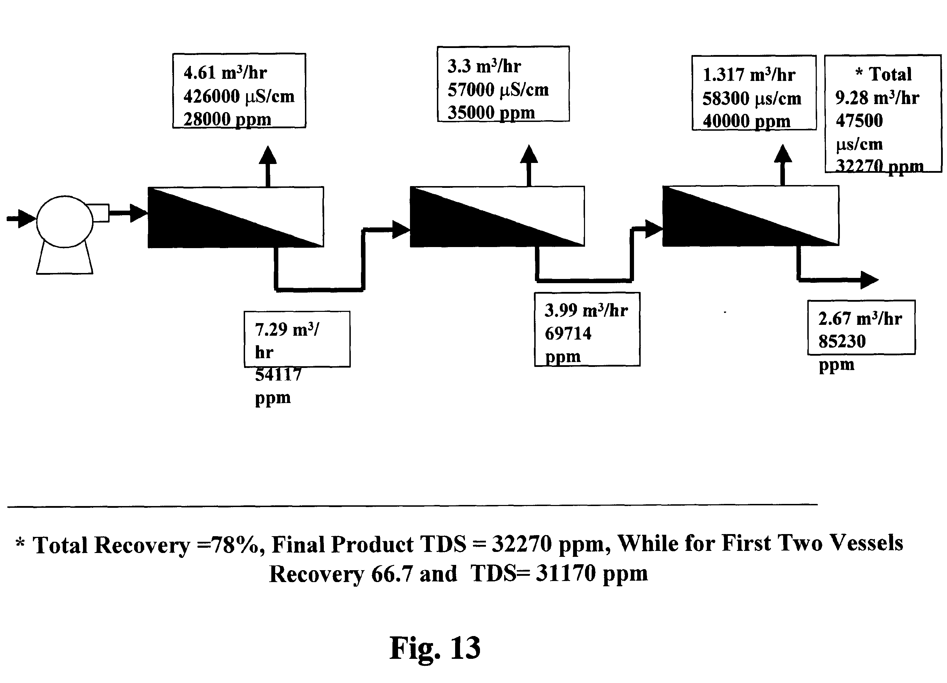

The results obtained from the operation of this commercial SWRO unit in the new dual NF-SWRO desalination hybrid showed vastly improved product output and recovery ratio over its (SWRO unit) operation in the commercial conventional SWRO desalination process. The output of Train 100 operated in the NF-SWRO mode was 130 m³/h from feed of NF product feed of 234 m³/h, as compared to an output of 91.8 m³/h when it was operated in the singular, conventional SWRO operation on 360 m³/h of seawater for an increase in train productivity by 42%. Furthermore, the SWRO unit recovery ratio in the dual NF-SWRO operation of 56% was double its recovery ratio of 28%, when it (SWRO unit) was operated in the singular mode. The same trend was noticed when comparing the permeate productivity and recovery ratios of NF-SWRO Train 100 to those results obtained from SWRO Train 200, which were for SWRO unit in the ratios of about 1.5:1.0 and about 56%: 23.5%, respectively, in favor of the former over the latter train operation (Figure 13). The product flow ratio of Train 100 to Train 200 was mostly in the order of about 160% : 100% (Fig. 13d) and over the two year operation the Train 100 output: Train 200 output was in the ratio of about 1.6-1.4 : 1, clearly in favor of the dual NF-SWRO operation to the singular SWRO plant operation.

Also, when compared to its operation in the conventional SWRO process, Train 100 operation in the dual NF-SWRO hybrid reduced significantly the unit production (m³) energy consumption and cost by 23% and over 46, respectively. By comparison to SWRO operation, the expected saving in both energy consumption/m³ and cost of unit water production by the NF-SWRO process are 39% and 68%, respectively. Furthermore, line conversion from SWRO to NF-SWRO operation was done swiftly and at a relatively low cost.

The US Patent 6,190,556 B1, Feb. 20, 2001 describes an apparatus and method for producing potable water from aqueous feed such as seawater utilizing a pressure vessel designed for low pressure operation (250 to 350 psi), inside this vessels both NF and RO membranes are placed with NF membrane elements upstream of RO membranes elements. The seawater feed is first passed through the vessel to be treated at this low pressure through the NF to remove hardness, but is only flushed unaffected through the RO membrane section. The collected NF product in a specially designed device is later passed under same pressure, utilizing same pump, through the same vessel, where its osmotic pressure is reduced, allowing for its desalination through the RO membrane.

In several other patents the RO modules were utilized ahead of SWRO modules in SWRO desalination.. US Patent 4,341,629 dated 7, 1982 described a process using as first stage unit a 90% ion rejection cellulose acetate followed by a second stage separate unit fitted with a 98% ion rejection cellulose triacetate SWRO membrane. US Patent 4,156,645 dated 5, 1979 invention proposes the recovery of fresh water also utilizing two stages consecutive separate units: utilizing as second stage SWRO unit fitted with tight membrane to treat the product from a first stage, separate loose RO membrane unit, the latter with 50 to 75% ion rejection, operated at low pressure P =300 to 400 psi (21-28 bar).. Loose RO membranes were utilized ahead of tight membrane also in EPO 6,120,810. US Patent No. 5,238,574, describes a method and apparatus for treating water by a multiplicity of RO membranes followed by evaporation devices to produce water and salt. US Patent No. 4,036,685 also describes a process and apparatus for production of a high quality permeate withdrawn from the first RO cartridge, while lower quality permeate is produced by combining the product from the next following two cartridges in series with first cartridge RO.

From the above discussion and results, it can be emphasized that the NF is designed to perform in addition to other pretreatment a very specific and super pretreatment function, namely its ability to reject hardness and covalent as well as trivalent ions to a much greater degree than its rejection for monovalent ions (see NF rejection at Umm Lujj plant- Figure 12) and as mentioned earlier at a much lower pressure than required by SWRO or RO processes. Moreover, the NF membranes are characterized by having a much higher flux and greater tolerance to turbidity in the feed than RO or SWRO membranes. These facts distinguish it and separate its function from other previously indicated water separation membrane processes, i.e., MF, UF and RO. For this quality, it should be remarked that Nanofiltration, loose reverse osmosis and low pressure reverse osmosis, which have been utilized in above patents, i.e., SWRO membranes receiving RO, loose RO, LPRO pretreated feed, are not considered to be equivalent in the art. Those skilled in the art in fact have recognized and still do recognize this fact that Nanofiltration (NF) pretreatment of feed seawater, which allows for removal of hardness and in consequence the production of potable water from SWRO at high recovery and without scale formation, is not only a super pretreatment of seawater feed to seawater desalination plants but is not also the operational or functional equivalent of reverse osmosis (RO) or loose membrane reverse osmosis (LMRO) membranes. The references cited below emphasize those differentiations:

1. Bequet et al., *Desalination,* **131** ;299-305 (2000).
2. Bisconer, "Explore the Capabilities of Nano- and Ultrafiltration, " *Water Technology,* March 1998 (2 pages; page numbers not stated).
3. Kodak, "Nanofiltration for Professional Motion Imaging, "On-Line Technical Support paper, pp. 1-6 (dated 1994-2000).
4. Linde et al., *Desalination,* **103**:223-232 (1995) *[ABSTRACT ONL Y]*
5. Nicolaisen, "Nanofiltration - Where does it Belong in the Larger Picture," pp. 1-7, Product technical bulletin for "Desal-5" membrane products; Desalination Systems, Inc. (December 1994).
6. Scott Handbook of Industrial Membrane, 1995 (page 46).

As Bisconer notes, the art recognizes that RO and NF can be considered to be "cousins" and that the membranes used may look alike, but that in fact they "serve distinctly different separation functions." It is clear from the references that among the significant differences among NF and RO (BWRO, loose RO and LPRO), NF provides significantly greater rejection of hardness ionic species and at a much higher product flux than RO, facts which were truly observed at Umm Lujj NF-SWRO trial; see above Hassan et al, also see Figure 12. See also especially Nicolaisen (1994), who points out that while various terms are sometimes used incorrectly in the art, those skilled in the art recognize definite superiority of NF to RO in at least its specific higher rejection of di- and tri-anionic species than the rejection of NaCl as well as it has (NF membrane) much greater flux than that of RO membranes. In addition, it has greater tolerance to turbidity fouling than SWRO membranes. Others make the same points, by noting that RO flux is low compared to NF flux and high pressures along with much higher membrane surface areas are needed for RO than with NF membranes. These facts were observed at the above commercial trial of NF-SWRO operation at Umm Lujj plant Train 100, where each NF module provided feed to nearly three SWRO modules (a module consists of one pressure vessel fitted with six membrane elements). To be operative, RO unit requires finer feed pretreatment than the NF membrane process in removal of solid particulates.

The SWRO membranes are the tightest desalination membranes and are characterized by their high salt (all ions) rejection. The SWRO membranes are operated at high pressure, 55-82 bar depending on membrane type, and because of their low flux, the SWRO process requires a large number of SWRO membranes to produce large quantity of water. Because of all those factors, the cost of water production by the SWRO process is considered to be the highest among all other membrane desalination processes. On the other hand, the NF membranes are operated at a much lower pressure and are characterized by having high flux. But most importantly, as mentioned above, they are characterized by their high specificity to the rejection of the scale forming hardness ions ($SO_4^=$, $Ca^{++}$, $Mg^{++}$, $HCO_3^-$); see Hassan et al. under previously given references.

With those major different properties, qualities and characteristics among SWRO and NF membranes as well as the properties which distinguish NF from other RO membrane including as mentioned above loose RO or low pressure RO membranes, an advantage was established in fully integrating NF and SWRO membrane processes in one dual NF-SWRO operation process, as was done above successfully by Hassan, A.M., US Patent 6,508,936 January 21, 2003, first on pilot plant scale (see Figure 8) and later on a commercial plant scale (see Figures 9 and 10). This, however, was done by utilizing each of the NF and SWRO units in one stage. As shown later, greater advantage is seen in operation of each of the NF and SWRO unit in the dual NF-SWRO set-up in two stages, with turbocharger inbetween the stages to recover energy from the brine. This highly optimized and well- designed dual $NF_{(2\ stages)}$- $SWRO_{(2\ stages)}$ arrangement, which as shown in Figure 1 for a proposed Red Sea SWRO plant, feed 316 $m^3/h$, and yields about 170 m3/h (1.08 mgd), is an optimal seawater desalination process and not only provides for an economical, efficient SWRO desalination operation by raising plant output, both yield and water recovery ratio, and by lowering energy requirement as well as the cost of fresh water unit production from the sea, but also it exceeds by far in efficiency what can be expected from prior art of conventional seawater desalination processes. The process as illustrated elsewhere separately in another of my invention is further applied with big advantages in the trihybrid of $NF_2$-$SWRO_{2\ reject}$ -thermal wherein the SWRO reject which is drastically low in hardness ion concentration is made make-up to the thermal unit.

This optimal $NF_{(2\ stages)}$- $SWRO_{(2\ stages)}$ and the trihybrids SWRO desalination system are not only quite different from prior art including the process described in US Patent 6, 190, 556B1, but is also much more superior to them in process efficiency and economy. For example, the NF-SWRO system described in US Patent 6, 190, 556 B1, Feb. 20, 2001, in which both the NF and SWRO elements are placed in same one pressure vessel are operated utilizing one pressure pump at an equal but low pressure of 250-350 psi (17.24 to 24.05 bar). In this system operation is to start first by collecting sufficient NF product, after which this collected NF product in a specially designed and controlled holding tank, is passed under pressure (low pressure of 250-350 psi), to SWRO membrane to produce a product, with a questionable quality, mainly because of the SWRO low pressure. More important, the NF membranes are to operate part of the time then to stand idle while SWRO is operational and vice versa, for partial utilization of the NF or SWRO membranes. By contrast, all the components in the present patent application $NF_{(2stage)}$-$SWRO_{(2 stage)}$ are fully utilized 100 per cent, a fact which results in higher plant productivity. Moreover, the two stage arrangement provides for sufficient high pressure to the $2^{nd}$ stages feed, especially to $1^{st}$ and $2^{nd}$ stage SWRO units, again allowing for higher plant productivity along with much higher product quality than that obtained from use of above US Patent 6,190,556 B1. To produce on a commercial scale same quantity of water by the two processes requires also much greater capital investment and more equipment utilizing the latter process than by that (optimal process) submitted in this patent application.

It would, therefore, be of substantial worldwide human interest, especially to those who need fresh water from the sea but can not afford it, to have available an optimal seawater desalination process, which would economically produce a good yield of fresh water from saline water, especially from seawater, and which would effectively and efficiently deal with the problems mentioned above; i.e., removal of hardness and turbidity from such saline water and the lowering of total dissolved solids at an increased plant productivity and an economical efficiency including low energy consumption and low water cost per unit water product. Again, the utilization of the NF (2 stages) pre-treatment process or the reject from SWRO unit fed NF product in providing make-up to thermal MSFD or MED plants will lead to similar gains, and to tremendous improvement in the efficiency of seawater membrane or thermal desalination plants.

## SUMMARY OF THE INVENTION

I have now invented an optimal SWRO desalination process, which, by combining two substantially different water membrane processes, as represented by the arrangements given in (Figures 1,2 and 3) in a manner not heretofore done, to desalinate saline water, with particular emphasis on seawater, to produce a very high yield of high quality fresh water, including potable water, at an energy consumption per unit of product equivalent to or better than much less efficient prior art conventional SWRO desalination processes. To achieve this objective each of the NF and SWRO units, for example, in Figures 1 is to be operated in two stages with energy recovery turbocharger (TC) in between the stages or alternatively continue to use NF in two stages with energy recovery TC in between the two stages while SWRO is made in one stage, again with energy recovery TC or pressure exchanger (PX) between the SWRO membrane unit and its high pressure pump, using the arrangement, as shown in Figures 2a and b or 3a and b, and with NF and SWRO membrane selectivity for the process as described below and in the previous sections. This way not only increases the yield and productivity of product from each step along with improving product quality but it also reduces the energy consumption per unit water production in the ratio of this optimal process: conventional SWRO without NF pretreatment of 0.445 : 1 when using PX system, with the ultimate effect on reducing the cost per unit water product. In my process the two stage nanofiltration as a first desalination step is synergistically combined with following two stage seawater reverse osmosis step or one stage as shown by the arrangements as given in Figures 1, 2 or 3, to provide totally integrated desalination system by which saline water (especially seawater) can be efficiently and economically converted to high quality fresh water in yields which are significantly larger than the yields available from the prior SWRO art processes, alone or in combinations heretofore known or described. Thus, while individual steps have been separately known and such steps have individually been disclosed in combination with other processes for different purposes, but at different staging, the present process, as argued earlier, has not previously been known to, or considered by those skilled in the art and nothing in the prior art has suggested the surprising and unique magnitude of improvement and high system efficiency in all forms of saline water desalination (membrane or thermal) obtained through this process as compared to prior art processes and equipment.

Therefore, in a broad embodiment, the invention is of a desalination process which comprises passing saline water containing hardness scale forming ionic species, microorganisms, particulate matter and high total dissolved solids through the two stage nanofiltration ($NF_2$) with energy recovery turbocharger in between the stages, supplemented as needed with a pressure boosting pump, to form a **first water product** at high recovery and low energy consuming NF water product having drastically reduced content of said hardness ionic species, as well as significantly lower TDS content than seawater and nearly completely removed microorganisms and particulate matter, and thereafter passing said **first water** product through the two stage seawater reverse osmosis ($SWRO_2$) with energy recovery turbocharger in between the two SWRO stages, supplemented as needed with a pressure boosting pump as shown in Figure 1 to form a **second final water product** (permeate) also having reduced salinity equal to that of potable water. This embodiment shall constitute the basis for an optimal membrane seawater desalination hybrid system $NF_{(2 stages)}$ - $SWRO_{(2stages)}$, which shall be part of the subject of this patent application.

Again in a second and third broad embodiments, the invention involves a desalination process, which comprises passing said saline water containing hardness scale- forming ionic species, microorganisms, particulate matter and total dissolved solids through the two stage nanofiltration to form a first water product having reduced content of said ionic species, microorganisms and particulate matter, thereafter passing said first water product through one of the following one stage seawater reverse osmosis with energy recovery TC or PX included within the stage, supplemented as needed with a high pressure boosting pump wherein the SWRO stage has the form and arrangement either as shown in Figures 2 or 3, to form a second water product (permeate) also having reduced salinity equal to that of potable water.

The three embodiments shall constitute the basis for an optimal SWRO desalination process, which shall be the subject of this patent application comprising the following seawater membrane desalination hybrids: $NF_2$-$SWRO_2$ (Figure 1), $NF_2$- $SWRO_1$ (Figure 2) and $NF_2$- $SWRO_1$ (Figure 3).

Only those three hybrids and the above three embodiments will be discussed under this filed patent application to be filed simultaneously with a second but separate patent application covering the thermal seawater desalination aspect of this invention.

The process readily and economically yields significant reductions in saline water (especially seawater) properties, and produces good fresh water including potable water. Typically in a process of this invention, the two stage $NF_2$ will produce with respect to the seawater feed properties, calcium and magnesium cation content reductions on the order of 75%-95% or better, sulfate in the order of 90 to 99.9% or better, pH decreases of about 0.4-0.5, and total dissolved solids content (TDS) reductions of about 30%-50%. Meanwhile product from the $SWRO_2$ or $SWRO_1$ unit is potable water quality. Similarly, as illustrated elsewhere, the distillate are the product from MSFD, or MED or VCD or RH units when they are operated on make-up consisting of NF product or SWRO reject from a SWRO unit fed on NF product. The highest water recovery of about 66% or better is achieved by tri-process of $NF_2$-$SWRO_2$ (reject) - thermal for ocean seawater feed TDS $\approx$ 35,000 ppm, which exceeds in value all those values obtained from prior arts of seawater desalination.

## BRIEF DESCRIPTION OF THE DRAWINGS

The figures are graphs or flow diagrams related to the data presented in the text. More detail description of the figures will be found in the discussion of the data.

Figure 1 is a schematic flow diagram for the present optimal fully integrated seawater desalination process comprising $NF_{(2\ stages)}$-$SWRO_{(2\ stages)}$ with turbocharger in between the 2 stages in each of NF and SWRO units.

Figure 2 same as Figure 1 but with one stage SWRO instead of two stages, utilizing high pressure ($P \cong 84$ bar), high flow and high salt rejection membrane with an energy recovery turbocharger (Fig. 2a) or Pressure Exchanger (PX) with higher pressure pump of $75 \pm 10$ bar (Fig. 2b).

Figure 3 same as Figure 2 with one stage SWRO unit, but using conventional SWRO membranes at high pressure ($P \cong 55 \pm 10$ bar), with energy recovery turbocharger system (Fig. 3a) or utilizing pressure exchanger arrangement (Fig. 3b) and recycling of part of the SWRO reject unit as feed to two stage NF unit.

Figure 4 is a graph showing the seawater desalination process separation of feed into product and reject and the concentration in the reject of turbidity, bacteria, hardness ions and TDS in the various seawater desalination (thermal or membrane) processes.

Figure 5 is a graph of main problems in the various seawater desalination processes.

Figure 6 is a graph showing the effect of seawater feed TDS on osmotic pressure and the net effective pressure ($P_{net}$) driving permeate through membrane.

Figure 7 is a plot for SWRO unit performance as measured by permeate (a) flow, (b) recovery, and (c) conductivity versus applied pressure; seawater feed with and without NF seawater pretreatment (NF and SWRO each consists of one stage only).

Figure 8 is a schematic flow diagram showing the full integration and arrangement of di- and tri-hybrid from NF, SWRO and MSF in NF-Seawater desalination (SWRO and MSF) pilot plants.

Figure 9 is a schematic flow diagram for the commercial Umm Lujj SWRO plant, (a) SWRO arrangement of the plant as built 1986 (Train 200), (b) The NF-SWRO arrangement as converted to NF-SWRO system, (one stage each of NF and SWRO), and operated Sept. 2000 (Train 100).

Figure 10 is a photo showing the Umm Lujj NF-SWRO plant (Train 100) as built in September 2000, with the installed NF unit in front, fully linked to SWRO unit in back of the photo.

Figure 11 Performance of NF membrane unit (product flow, recovery and conductivity) at Umm Lujj NF-SWRO Train 100 at the fixed NF product recovery of 65% vs operation time.

Figure 12 is a diagram showing the composition of seawater feed and the NF product with emphasis on their content of scale forming hardness ions ($SO_4^=$, $Ca^{++}$, $Mg^{++}$, $HCO_3^-$), $Cl^-$ and TDS along with their ionic rejection (%) by the NF membrane.

Figure 13 is a flow diagram showing the performance (product flow & recovery), product flow ratio of Train 100 to Train 200, and operating condition for SWRO unit Train 100 in fully integrated NF-SWRO system shown in Figure 9.

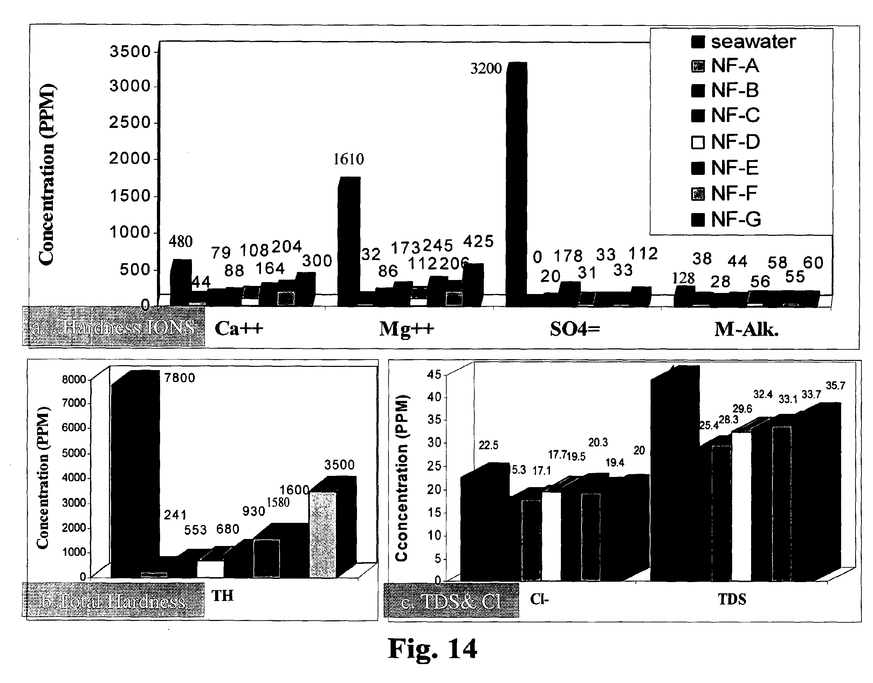

Figure 14 is a flow diagram showing NF elements performance utilizing a pilot plant having 3 different pressure vessels arrangement, each pressure vessel containing 2 NF 8" x 40" elements.

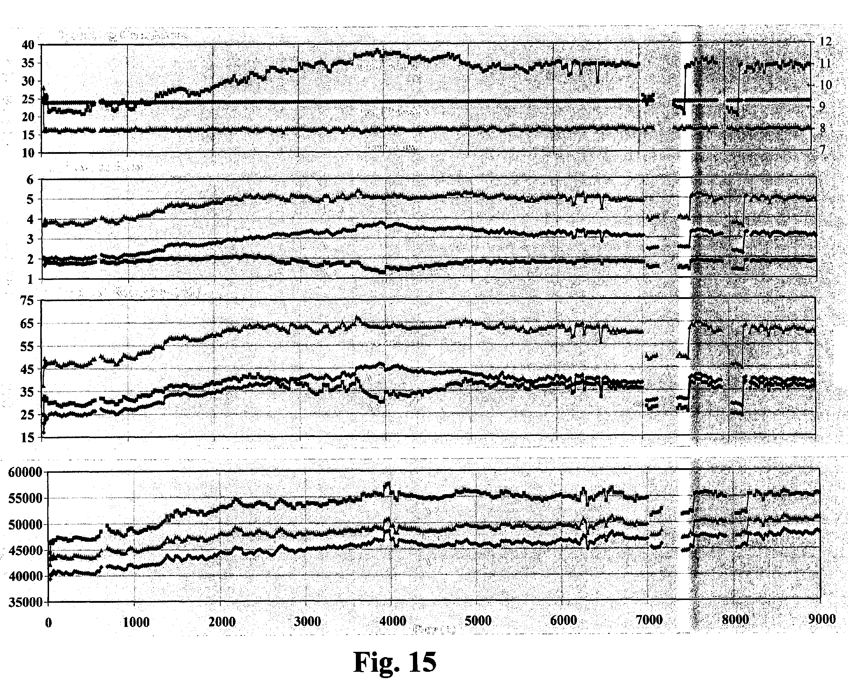

Figure 15 is a plot of NF performance as first NF stage vs operation time (over 9000 hrs) using two pressure vessels arranged in series where each vessel contains two NF elements.

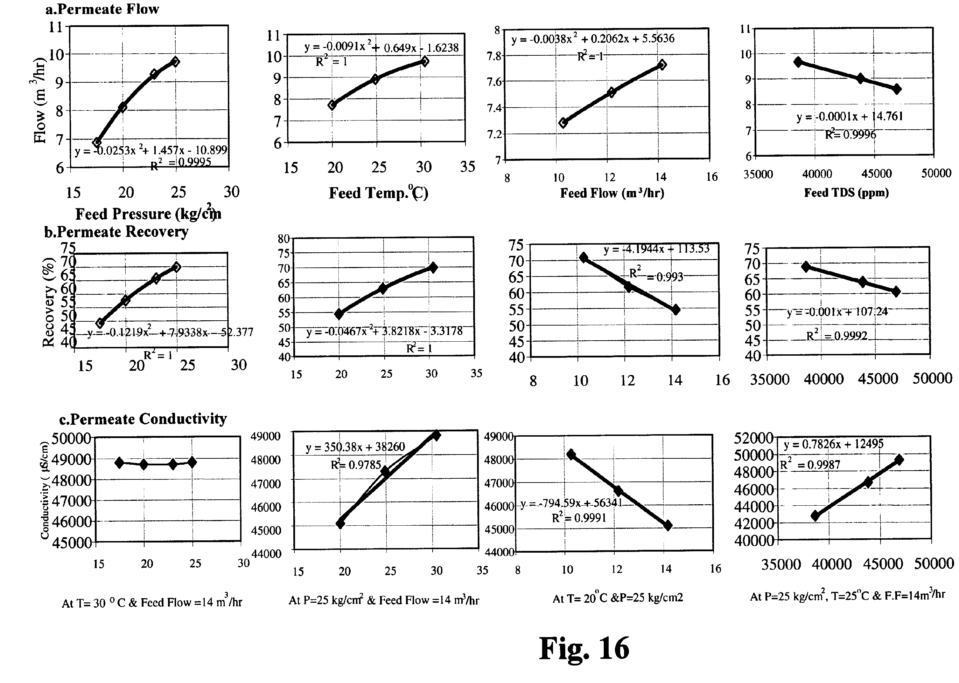

Figure 16 is plot of NF unit performance as measured by permeate: (a) Flow, (b) Recovery and (c) Conductivity at various operating conditions (pressure, temperature, feed flow and feed TDS).

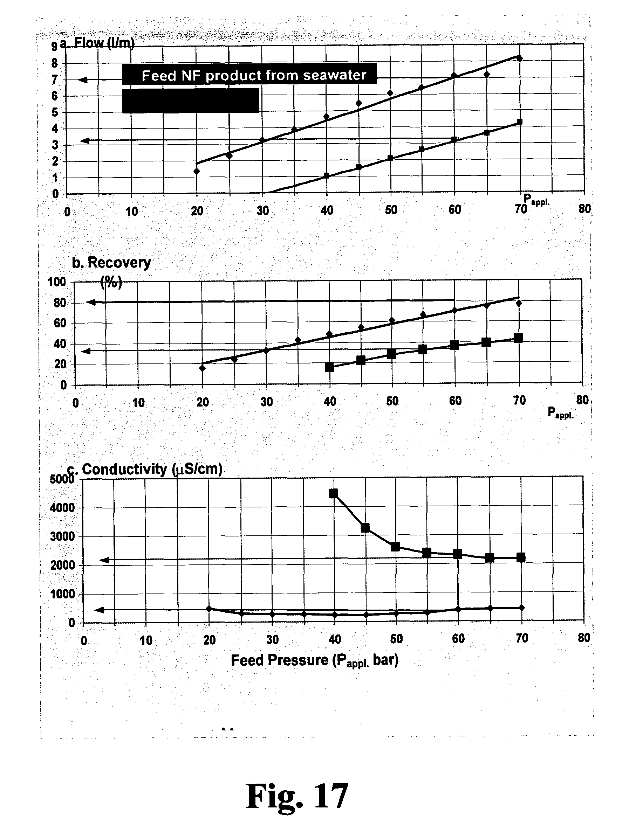

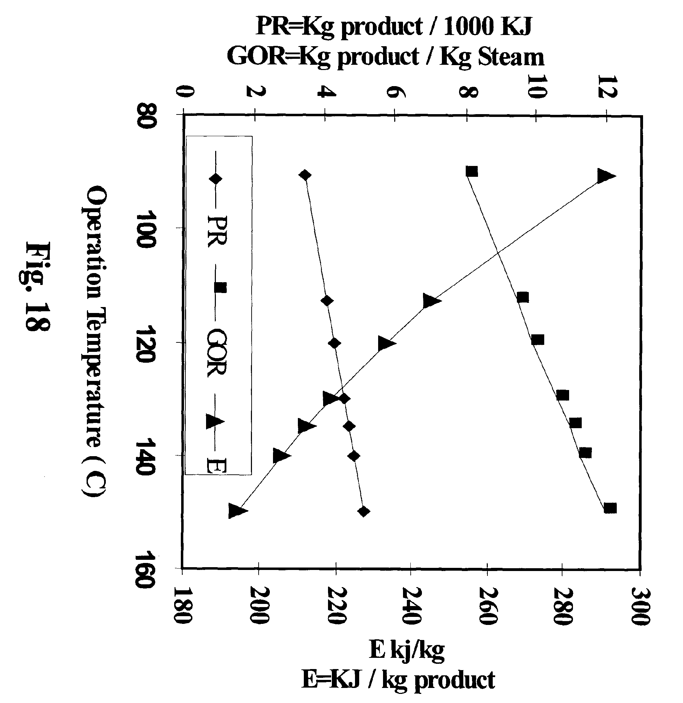

Figure 17 is a schematic flow diagram of the process of this invention as compared to that of the conventional SWRO process for the production of one million gallon plant per day showing only the desalination part of each of the two processes.

## DETAILED DESCRIPTION AND PREFERRED EMBODIMENTS

The present optimal SWRO desalination invention will be best understood by first considering the various components and properties of saline water, and especially of seawater. Seawater, as mentioned earlier, is characterized by having high TDS, a high concentration of hardness due to presence of the scale forming hardness ions of $Ca++$, $Mg++$, $SO_4^=$ and $HCO_3^-$ at relatively high concentration of varying degrees of turbidity in the presence of particulate matter, macro and microorganisms and a pH of about 8.2. Many of the problems and their effect on limitations in seawater desalination are related to those seawater qualities. Typically seawater will have a cation content on the order of 1.2%-1.7%, of which typically some 900-2100 ppm will be "hardness" cations, i.e., calcium and magnesium cations; an anion content of scale forming hardness anions, i.e., sulfate and bicarbonate, in the order of 1.2%-2.8%; a pH on the order of 7.9-8.2; although wider ranges of one or more of these properties may be present, to constitute a total dissolved solids content on the order of 1.0%- 5.0%, commonly 3.5% - 4.5%. However, it will be recognized that these components and properties vary throughout the world's oceans and seas. For instance, smaller enclosed seas in hot climates will normally have higher salinities (ionic content) than open ocean regions, e.g., Gulf versus ocean sea composition in Table 1.

One major problem in seawater desalination, particularly for SWRO processes, is the sea water feed high TDS. The feed osmotic pressure increases as the feed TDS is increased. At a given applied pressure (P appl.), this increase in osmotic pressure ($P\pi$), of about 0.7 bar/1000 ppm increase in TDS, reduces both the available pressure $P_{net}$,

$$P_{net} = P\ appl.\ -\ P\pi \qquad\qquad\qquad (1)$$

Where $P_{net}$ is the net pressure driving the water through the RO membrane to yield the permeate flow. To increase $P_{net}$ and consequently the permeate flow requires a higher applied pressure provided the membrane strength allows. The effect of varying feed TDS on osmotic pressure and $P_{net}$ pressure in a SWRO process at a temperature of 25°C and an applied pressure of 60 bar and final brine TDS of 66,615 ppm was shown earlier in Figure 6. The available useful pressure to drive the water through the membrane is marked by the shaded area of $P_{net}$ decreases as the feed TDS increases. Since the permeate flow through the membrane is directly proportional to the water driving pressure $P_{net}$, reduction of seawater feed TDS by the present process not only reduces wasted energy but also increases the fresh water permeation through the membrane. As will be illustrated below, this case of lowering energy requirement per unit water product by lowering TDS of feed, which leads to an increase in $P_{net}$ and permeate flow, is a principal advantage effect obtained by the present invention process.

Likewise, turbidity (reflected by total suspended solids and microorganisms) of a small area of a sea or ocean, such as the area from which a desalination plant would draw its seawater feed, will be dependent upon the local concentration of organisms and particulates, and even within the same area such concentrations can and often do change with weather, climate and/or topographical changes. Typical values are shown in Table 1, and illustrate the sea water variation between typical open ocean water, Mediterranean sea, and water of an enclosed "Gulf sea (sometimes referred to hereinafter as "ocean water" and "Gulf water" respectively). While "ocean water" is often taken as the basis for standard (normal) seawater properties, for the purposes of discussion herein, it will also be recognized that the components and properties of the world's oceans and seas are substantially similar everywhere. Main differences are in salt concentration, but not in their percentage ratio relative to each other, which tends to remain constant, e.g., in various seas the $Na^+$ and Clconcentration ratio to total salt concentration remain the same at about 30.7% and 55%, respectively, see Table 1. Those local variations, which do occur, are well understood and accommodated by persons skilled in the art. Consequently the invention described herein will be useful in virtually any geographical location, and the description below of operation with respect to Gulf water or ocean water should be; considered exemplary only and not limiting.

The presence of particulate matter (macroparticles), microorganisms (e.g., bacteria) and macroorganisms (mussels, barnacles, algae) requires their removal from feed to both SWRO and thermal desalination plants. Removal of turbidity and fine particulates normally defined as total suspended solids (TSS) from feed destined to SWRO plants is essential but has not been restrictedly required for the thermal processes. Removal of the chlorine from feed to chlorine sensitive NF and SWRO membranes has also been a most requirement.

The third major problem which as already repeatedly indicated, and which is inherent in all prior art desalination processes, is the high degree of hardness ions in seawater and is of higher negative effect in thermal than in membrane processes. Since all desalination processes operate to extract fresh water from saline water, salts and hardness ions are left behind in the brine with the effect that both the brine TDS and hardness concentrations are increased. This was illustrated in Figure 4. Because hardness ions are sparingly soluble in seawater, it is common for them upon their concentration in the brine to precipitate in the form of scale within the desalination equipment, e.g., on tubes, membranes, etc., thus limiting water recovery to low values, for example to 25-35% or less for desalinated Gulf seawater and up to 30-40% in ocean seawater. Depending on the desalination process operating conditions, two types of scale form: an alkaline soft scale principally composed of $CaCO_3$ and $Mg(OH)_2$ and a nonalkaline hard scale principally composed of $CaSO_4$, $CaSO_4$, $\frac{1}{2}H_2O$ and $CaSO_4,2H_2O$. The formation of the latter form becomes exaggerated at higher temperature, since the $CaSO_4$ solubility decreases as the solution temperature is increased. In the past, operators of MSFD or other thermal desalination plants, such as MED plants, commonly added acid and/or other antiscaling additives to the feed water, to limit process operation at brine temperatures of 90-120°C for MSFD and 65°C for the MED plants without scale formation. However, in spite of this, product fresh water recovery as a fraction of product to make-up feed from Gulf seawater was low 25% to 35% or less. For higher operating temperatures, ion exchange was required to remove $SO_4^=$ or Ca++ and obtain higher water recovery. Similarly, in SWRO operation antiscaling agents have also been commonly added to prevent membrane or plant scaling, but again water recovery by the conventional processes, for example for Gulf seawater, is again to be limited to about 25-35% or less. In addition, antiscaling agents are normally returned to the marine environment either as part of the brine discharge or during descaling operations. Such materials are usually contaminants in the marine environment, and as such would be better avoided.

These problems in seawater desalination and measures used in the past to alleviate them were summarized and presented earlier in Table 2 along with the quality requirements of feed to SWRO plant where the feed is taken from an open sea (surface) intake. The two stage NF feed pretreatment process used with or without proper antiscalant in this invention is able to efficiently and economically remove turbidity, hardness ions and lower TDS for which the present process can do at high NF product recovery ratio higher than that expected from prior art, and thus it will be seen that the present process represents a marked improvement over the conventional and other prior art seawater desalination processes. Moreover, removal of hardness ions will serve also in raising recovery in all types of seawater desalination processes (membrane or thermal).

In brief, the present optimal seawater desalination process significantly reduces hardness, lowers TDS in the membrane steps, and removes turbidity from the feed, thus lowering of energy and chemical consumption, increasing water recovery and lowering the cost of fresh water production from seawater. This is achieved by the unique combination of NF with SWRO, each in two stages with energy recovery turbocharger in between as shown for illustration in Figure 1, or SWRO one stage as shown by the arrangement given in Figures 2 or 3 (also NF with MSFD, MED or VCD), which can be further enhanced by additional combination with media filtration, and depending on feed quality with and without coagulation or using a subsurface intake such as beach wells for collection of the seawater.

Nanofiltration and SWRO desalination have all been described extensively in the literature and commercial installations of each exit. Therefore detailed descriptions of each step, the equipment and materials used therein and the various operating parameters need not be given here in detail. As typical examples of comprehensive descriptions in the literature, reference is made to Kirk- Othmer, ENCYCLOPEDIA OF CHEMICAL TECHNOLOGY, 21:327 -328 (4th Edn.: 1991) for nanofiltration; *ibid,* pp. 303-327, for SWRO; and McKetta et al. , ENCYCLOPEDIA OF CHEMICAL PROCESSING AND DESIGN, 16: 198-224 (1982) and Corbitt, STANDARD HANDBOOK OF ENVIRONMENTAL ENGINEERING, 5-146 to 5-151 for RO.

With the basic concepts of NF and SWRO described and understood, the details of the steps of the work done on coupling NF to SWRO with full integration in two stage for NF and two or one stage SWRO (Figures 1, 2 and 3) SWRO or NF and MSFD can be best understood by reference to the experimental work, which was done on a pilot plant scale. A schematic flow diagram of one single stage NF combined in one single stage SWRO to form on NF-SWRO process is given in Figure 8. The process consists of seawater supply system, dual media filter followed by a fine sand filter, 5 micron cartridge filter, feed tank, the NF unit and the SWRO unit, each consisting of one stage. The particle size of sand in the sand filter may vary, and is normally on the order of 0.3-1.0 mm. The pretreatment part of this system is retained in this new invention of dihybrids or trihybrids such as $NF_2$-$SWRO_2$ (Figure 1) or trihybrid of $NF_2$ - $SWRO_2$ - thermal, or $NF_2$ - $SWRO_1$ where only one stage SWRO utilize high pressure membrane, e.g., Toyobo HB type (Figure 2) or $NF_{(2\ stages)}$ - $SNVRO_{(1\ stage)}$ (Figure 3) with recycling of SWRO reject to NF feed to a one mgd or more SWRO plant but all having the same feed quantity of 316 $m^3$/h, as shown for illustration in Figures 1, 2 and 3 where the filtration process is not shown in each of the Figures 1, 2 and 3.

In commercial SWRO or NF plants the membrane elements are normally arranged in series of six elements per pressure vessel. This type of membrane arrangement is the preferred arrangement in many of the commercial NF and SWRO plant worldwide. This is also the arrangement of NF and SWRO elements used in operation of the dual NF-SWRO in the commercial Umm Lujj SWRO plant, which is shown in Figures 9 and 10. To establish the performance of the six elements within one pressure vessel, a demonstration unit was built utilizing three pressure vessels each fitted with 2 NF elements (8" x 40") instead of the six elements (8" x 40") per one pressure vessel as shown in Figure 14. The performance of each two elements within the 1st : 2nd : 3rd pressure vessel were as shown in same figure and were in the ratio of :

| | | | | | |
|---|---|---|---|---|---|
| Product flow | 4.61 | : 3.3 | : 1.32 | for a total of | : 9.28 $m^3$/h |
| Product recovery | 38% | : 28% | : 11% | for an overall recovery of | : 78% |
| Product TDS | 28,000 | : 35,000 | : 40,000 | for a combined product | : 32,270 ppm |

from a feed of 11.95 $m^3$/h having TDS of 45,000 ppm at an applied pressure of 25 bar and T = 30 °C. For each vessel, the product recovery ratio is computed as the ratio of NF product to the total feed of 11.95 m3/h. As shown in the same figure the two elements within the 3rd vessel are highly stressed; they receive at P = 24 bar feed of only 3.99 $m^3$/h having TDS = 69,100 ppm or one third the feed, for example of 11.95 $m^3$/h for the first two elements, which are fed on seawater, TDS = 45,000 ppm, at P = 25 bar. Higher pressure is required for the operation of elements in the third pressure vessel to overcome the increase in their feed osmotic pressure.

To remove this large stress, or part thereof, on the final two elements within the third vessel and in order to increase the efficiency of the NF process, an arrangement such as shown in Figure 1 was utilized in this invention. In this arrangement, the NF process is conducted in two stages with energy recovery turbocharger inbetween. This arrangement does two functions: it increases product flow and water recovery and as shown later, reduces the energy consumption per unit water product. Number of elements ratio in the first: second NF stages is made in the ratio of about 2 : 1. Furthermore, with this arrangement at a recovery of about 50-60%, each element within the first and at 50% recovery by the first NF stage, the second NF stage receives nearly the same amount of feed as received by elements in first stage and with the elements in second stage receiving higher feed than that delivered to the first stage elements when the SWRO recovery ratio for the latter (first NF stage) is less than 50%. The first stage, which is fed on seawater at P = 25 $\pm$ 10 bar, comprises for illustration two NF blocks in parallel, here a block, depending on seawater feed quality (TDS), consists of a number of pressure vessels, arranged in parallel, each pressure vessel is fitted with 4 NF elements. A total of up to 6 elements could be utilized within one pressure vessel if the feed TDS is of ocean quality or less. Meanwhile, the second stage comprises one NF block having about one half the number of modules as that within the first stage blocks. All modules are arranged in parallel and each consists of one pressure vessel fitted with 4 NF elements. The NF elements of the first and second stage could be the same membrane, if the membrane can tolerate high pressure up to 35 $\pm$ 10 bar, or the second stage NF membrane elements are chosen to be of higher pressure tolerance, up to 45 bar, and is more than the pressure which can be tolerated by the first stage NF elements. The second stage NF unit is fed on the combined reject from the first stage modules after its pressure is being boosted by the turbocharger from 25 $\pm$ 10 to about 35 $\pm$ 10 bar. The second stage pressure, if needed, can be raised (boosted) further as shown in Figures 1, 2 and 3 by use of a booster pump that is capable of receiving the first stage reject turbocharger at high pressure and boosts it further to the desired pressure value. The turbocharger pressure boost ($\Delta$P) equals (Pump Engineering, Inc. Manual # 299910) :

$$\Delta P_{tc} = (nte)(R_r)(P_r - P_c) \qquad (2)$$

nte = the hydraulic energy transfer efficiency

$R_r$ = ratio of brine flow to feed flow to turbocharger

$P_r$ = brine pressure to turbocharger

$P_c$ = brine pressure leaving turbocharger

For the SWRO case shown in Figure 1, the calculated $\Delta P$ equals 37.5 bar and for the NF case is about 13 bar.

Arrangement of the $NF_{(2\ stages)}$ - $SWRO_{(2\ stages)}$ can be illustrated by Figure 1. The NF unit is made of a high pressure pump to provide up to $25 \pm 10$ bar pressure to the first stage NF unit, which consists of two modules arranged in parallel. As previously mentioned, a module consists of one pressure vessel containing four NF of 8" x 40" or other dimension membrane elements. NF membranes may be spiral wound, hollow fine fiber, tubular or plate configuration, although nearly all commercial NF membranes are thin film composite types and are made of noncellulosic polymers with a spiral wound configuration. The polymer is normally a hydrophobic type incorporating negatively charged groups, as described for instance in Raman et al., *Chem. Eng. Progress.* 7(1):58 (1988). The seawater feed is supplied at ambient sea water temperature to the first stage modules and their combined pressurized reject is fed to its following second stage modules also having 4 NF elements per module, after boosting its pressure to $35 \pm 5$ bar; by the turbocharger fixed in between the two stages as shown for illustration in Figure 1. Pressure more than 40 bar, if needed, can be raised by the booster pump. Number of modules in the second NF stages is equal to about one half or thereabout their number in the first NF stage. The seawater feed pretreatment unit has the same components and arrangement as those in the feed pretreatment given in Figure 8. Alternatively, direct feed from beachwell, without need for a pretreatment unit, will do.

The combined NF product from first and second NF stage is fed to SWRO unit comprising one high pressure pump to provide pressure of $55 \pm 10$ bar to first stage SWRO consisting of a block of modules arranged in parallel, and consists of membranes of the type used in conventional SWRO plant, e.g., Toyobo or Toray or Hydranautics or Filmtec or DuPont membranes, etc. and the pressurized reject collected from the first stage SWRO modules is passed through the turbocharger to boost its pressure to about $85 \pm 5$ bar followed by feeding this pressurized reject to second stage SWRO unit made of one block of SWRO module where each module consists of one pressure vessel fitted with 4 or 6 SWRO elements of high pressure tolerant, brine conversion, for example, Toray 820 BMC or equivalent SWRO membranes. By the use of turbocharger, and booster pump if needed, the pressure can be raised up to 90 bar. The combined product from the two SWRO stages is collected and comprises the final product with potable water qualities.

From field investigation of commercially available NF membranes done at our R&D it was illustrated that they are vastly different in performance and can be classified, more or less, into three groups : Group "A" tight structure NF membrane characterized by having high rejection , but low permeate flow (flux) in contrast to Group "C" of high flow and modest ion rejection particularly TDS, while Group "B" has good balanced performance of permeate flow and ionic rejection (Hassan et al. IDA World Congress on Desalination Proceeding, Oct. 1999). As a result of this investigation, membrane of Group "B" were successfully utilized in the dual NF-SWRO operation of Umm Lujj SWRO plant (Hassan et al., IDA World Congress on Desalination Proceeding, Oct. 2001). Same type of NF Group "B" and/or selected NF membrane of Group "C" are being utilized in the present invention in the first stage vessels in a plant of this invention, such as the one shown in Figure 1. Group "B" type membrane with a higher pressure tolerance membrane are utilized in the second stage NF unit.

By utilizing a demonstration plant consisting of three pressure vessels, each containing 2 NF 8" $\times$ 40" membrane elements, a product recovery ratio of 66% was achieved from the first and second module elements at P =25 bar, at feed of about 12 $m^3$/hour and T = 30°C (Figure 14). While only a recovery ratio of about 62% was achieved when operating same four elements in two pressure vessels in a repeated trial but at feed of 8 $m^3$/h, P = 24 bar and T = 28°C (Fig. 15). An NF product flow of about 5.1 + 05.2 $m^3$/h was obtained from 8 $m^3$/h feed for a product recovery of about 62% was maintained from this first stage NF unit as far as the NF feed quantity, its temperature and pressure are maintained constant which they also provide constancy in product conductivity (Fig. 15). Control of feed temperature to about 35 °C was done by blending part of the warm seawater (43 °C), used in cooling the MSF distillate in heat rejection section of MSF unit, with cool seawater (18-25 °C) (see Fig. 8). Variation in NF unit performance with feed temperature is vividly illustrated in Figure 16, when the NF unit was operated on seawater feed (18-25 °C) without the blending process. As shown in Table 3, the scale forming hardness ions rejection of $SO_4^=$, $Mg^{++}$, $Ca^{++}$ and $CHO_3^-$ by NF elements of the first vessel were: 99.9, 98.3, 96.8 and 84.4%, respectively, as compared to 99.9, 98.3, 96 and 78% for the hardness ions ionic rejection by NF elements in second vessel. In some trials the $SO_4^=$ ions were not detected in the product of NF elements in first and second vessels. It is noticed that the hardness ions rejection of $SO_4^=$, $Mg^{++}$ as well as total hardness which is above 98% is nearly in the same order by NF elements in the first and second vessels product and is similar for the rejection of $Ca^{++}$ ions. However, there is difference in the rejection of $HCO_3^-$ between the NF elements of vessels one and two (Table 3). The NF hardness ions rejection established in this trial are similar to those established earlier at Umm Lujj plant where 6 NF elements were placed in one pressure vessel (Figure 12). Product water recovery as compared to feed of about 8 $m^3/h$ was 36.3% and 25.6% for the former elements in first and second pressure vessel, for a total of about 62% from the 4 elements.

By comparison to the superior rejection of NF membrane to hardness ions, the rejection of the monovalent $Cl^-$ ion is only 35.6 and 23.8% for NF elements in vessels one and two, respectively, while their TDS ionic rejection was 42.7 and 31.4%, respectively, in support of earlier argument that NF rejection is much greater for covalent hardness ions than that of its rejection of monovalent ions, while RO (BWRO, SWRO, LPRO and loose RO) have, more or less, same rejection for mono and covalent ions.

**Table 3. Chemical Composition and Physical Properties of Seawater, NF Filtrate and NF Salt Rejection**
(vessels 1 and 2 are operated in series each contains two NF elements)

| Element/Parameter | Seawater Ion Conc. | NF Filtrate (Vessel 1) | | NF Filtrate (Vessel 2) | |
|---|---|---|---|---|---|
| | | Ion Conc. | Rejection % | Ion Conc. | Rejection % |
| **Hardness** | | | | | |
| Ca$^{++}$ (ppm) | 481 | 16 | 96.8 | 20 | 96 |
| Mg$^{++}$ (ppm) | 1608 | 27 | 98.3 | 27 | 98.3 |
| Total Hardness (ppm) | 7800 | 150 | 98 | 160 | 97.9 |
| SO$_4^=$(ppm) | 3200 | 1 | 99.9 | 1 | 99.9 |
| HCO$_3^-$(ppm) | 128 | 25.1 | 84.4 | 344 | 78 |
| **Others Ions** | | | | | |
| Cl$^-$ (ppm) | 24100 | 15561 | 35.6 | 18367 | 23.8 |
| **Dissolved Solids** | | | | | |
| TDS (ppm) | 44046 | 25240 | 42.7 | 31,400 | 28.7 |
| Product follow (m$^3$/h) | - | 2.89 | - | 2.02 | - |

From above results and as shown in Figures 15 and 16 especially in Figure 16, the NF performance is dependent on operating conditions of applied pressure, operating temperature, feed flow (quantity) and quality (TDS). By control of those operating conditions, it can be concluded that a recovery ratio up to 62% or better can be obtained, as already established, from first NF stage in an NF pretreatment unit having an arrangement as shown in Figures 1, 2 and 3. Further more, a recovery of about 35% can be easily obtained from the reject of the NF first stage when it is fed to the second stage of the same figure, bringing the overall recovery from the two stages to 75%. A total recovery of 77% was obtained at the pilot plant from two stage unit, when the first stage was operated at 25 bar at the recovery of 62% and the second stage at 40% recovery. Feed consisted of Gulf seawater, TDS ≈ 45,000 ppm. The NF product recovery rose to 80% upon raising the pilot plant feed to 9 $m^3/h$ from 8 $m^3/h$ while maintaining pressure at the same value of 25 bar. Higher recovery ratio can be obtained by the trial of different NF membranes with or without addition of proper antiscalant to the seawater feed. A higher recovery than this value can be obtained from the NF$_{(2stages)}$ unit by the addition of proper antiscalant to the feed. This compares to, as mentioned earlier, up to a 70% NF product recovery which was obtained from 6 elements arranged in series within same pressure vessel at Umm Lujj plant [Hassan, A.M., et al, IDA World Congress Proceedings, Bahrain, March 2002].

The same advantages realized from the two stage NF as illustrated by the arrangement shown in Figure 1 can be also gained in SWRO operation by the arrangement of SWRO unit, as shown in same figure, also in two stages with turbocharger in between the dual NF-SWRO desalination system. This becomes quite feasible and applicable when considering the use of lately developed SWRO high pressure, membranes. Their use, for example, allowed for increasing the ocean (Japanese) seawater recovery from 40% to 60%, for an increase by 50%; see above Goto et al. At the SWRO pilot plant level operated at our site, a water recovery of 60% was achieved, when the plant was operated on NF product from a one stage NF unit at an applied pressure of only 50 bar, and the recovery rose to 80% at an applied pressure of 70 bar (Figure 7). Similarly, a water recovery ratio of 56-58% was achieved at Umm Lujj SWRO Train 100 operated in one stage on NF product (see earlier references under Hassan, et al.).

Assuming as shown in Figure 1 a water recovery for first stage SWRO of 56% a total of 133 $m^3/h$ is achieved from the first SWRO stage as compared to only 37 $m^3/h$ obtained from the second stage SWRO at the water recovery of 35% and pressure of about 92 bar, for a total product of 170 $m^3/h$ from 238 $m^3/h$ of NF product as feed, or for an overall recovery from the two stages of over 71%. Because of the high pressure applied to the second SWRO stage with very low hardness ions content a higher recovery than 71% is expected from the two stage SWRO unit. This brings the overall NF$_{(2\ stages)}$ - SWRO$_{(2\ stages)}$ desalination hybrid overall recovery to about 54% (0.75 x 0.714).

In addition to the gained benefit of increasing plant productivity, both water flow and product recovery, along with lowering of energy requirement and water cost per unit water product, this optimal dual NF$_{(2\ stages)}$-SWRO$_{(2\ stages)}$ (Fig. 1) or NF2 - SWRO$_1$(Fig. 2) or NF$_2$ -SWRO$_1$ (Fig. 3) seawater desalination processes of this invention have the following advantages:

(1) Because of the significant reduction in hardness and the consequent reduction or elimination of scaling, it is no longer necessary to add antiscaling chemicals to the feed to the RO step or to pass such chemicals into the RO equipment where, in prior art systems, scaling would occur. This of course, is a significant advantage from an environmental standpoint, since such chemicals, are no longer discharged into the marine environment or deposited in land-based sludge or water reservoirs.

(2) Moreover, because of the high purity of NF product in that it contains no suspended solids or bacteria, the differential pressure across the SWRO membrane (ΔP) remains very low and, therefore, the SWRO membrane will not be fouled. This should lead to a longer life of SWRO membrane as well as it continues to maintain a sustained high efficiency membrane performance, and without frequent cleaning. At Train 100 of Umm Lujj the SWRO membrane are now in operation of over 3 years and 6 months without cleaning or replacement of any SWRO membranes, although they were in continuous service for 8 months on seawater feed without NF pre-treatment, prior to their operation for over 34 months on NF product.

(3) Because of the high quality of the SWRO product, produced by this dual NF-SWRO process, a second stage RO unit is not required as normally done in the conventionally operated SWRO plants, where this second stage is required to produce the good water quality with TDS <500 ppm.

(4) One major advantage of the present dual NF-SWRO process is in the good quality of its SWRO reject, which qualifies it as a make-up to thermal seawater desalination plants. Besides its high clarity in absence of suspended solids and bacteria, as shown in Table 4, it contains drastically much lower concentration of the scale forming hardness ions of SO$_4^=$, Mg$^{++}$, Ca$^{++}$, and HCO$_3^-$ than that in seawater.

**Table 4. Chemical Composition of Gulf Seawater, NF Permeate and SWRO Reject from the Optimal NF$_{(2\ stages)}$-SWRO$_{(2\ stages)}$ Desalination System**

| Parameters | Gulf Seawater | NF Permeate Average[1] | SWRO Reject[2] |
|---|---|---|---|
| Calcium (ppm) | 481 | 25 | 83.5 |
| Magnesium (ppm) | 1608 | 35 | 116 |
| Sulphate (ppm) | 3200 | >2 | >6 |
| M$_{alk}$ as CaCO$_3$ (ppm) | 128 | 15 | 50 |
| Total Hardness as CaCO$_3$ (ppm) | 7800 | 210 | 700 |
| from actual measurement, [2] Computed from product water recovery of 70% | | | |

The further utilization of this product in a trihybrid desalination system of NF$_2$-SWRO$_{2\ reject}$-thermal, where each of NF and SWRO are operated in two stages, enhances the overall water recovery ratio of the seawater desalination process.

(5) The energy consumption/m$^3$ product for the present optimal process invention: energy consumption/m$^3$ for a one million gallon conventional SWRO plant as shown in Figure 17 is 4.269 KWh/m$^3$ compared to 9.326 KWh/m$^3$ for the conventional two stage (SWRO followed by RO) process (Fig. 17), in the ratio of 0.44 : 1. The energy consumption (KWh/m$^3$) of this process is about 44% of that required by the conventional one SWRO stage followed by a second brackish RO system, for an energy saving of 54%. The energy requirement was calculated from Eq. 3:

$$\text{Energy (KWh/m}^3) = [Q_f.\ H_f\rho/366\ Q_p e] \qquad (3)$$

Where :

- Q$_f$ and Q$_p$ are the quantity of feed and product in m$^3$/hr, respectively.
- H is the pressure head in (m),
- ρ density of seawater (1,03), and

- e pump efficiency ($\approx 0.85$).

(see - Water Treatment Handbook, 1979, A Halsted Press Book, John Wiley & Sons, (Fifth Edition). See also " Pump Handbook (Second Edition), Igor J. Karassik William C. Krutzsch, Warren H. Franser and Joseph P. Messina. McGraw Hill, International Edition, Industrial Engineering Series).

To further illustrate the advantages of the present process, a commercial plant simulation was conducted utilizing the fully integrated optimal dual NF$_{(2\ stages)}$-SWRO$_{(2\ stages)}$ plant design, for the production of one million US gallon per day (mgd) SWRO plant from Gulf seawater feed, TDS $\approx$ 45,000 ppm and its performance is compared to that of conventional SWRO with same production capacity (Figure 17). The NF recovery for Gulf water is set at $\approx$ 75%, while the SWRO unit recovery was set at 71%. To raise the recovery from 56% from first stage SWRO to 71% from the two stages, requires that the second stage adds 15% to the total SWRO unit recovery. In above work at the pilot plant level, this is quite possible since the second stage, high pressure SWRO allowed for a recovery of 35% or more of the reject from first stage SWRO unit. Using the same ratio of 35%, the recovery of product from above Umm Lujj first stage reject of 44% of total feed is 15.4% (i.e., 0.35 x 44 = 15.4%), for a total recovery of 71.4% (56 + 15.4%). In fact, at high pressure and low feed TDS for the first and second SWRO stages, it is expected to have a SWRO unit total recovery higher than 71% (see Fig. 7).

Table 5 illustrates the many advantages gained by the application of the present optimal NF$_{(2stages)}$-SWRO$_{(2stages)}$ seawater desalination process invention over the conventional SWRO process in recovery as well as in lowering the amount of feed and energy consumption (KWh/m$^3$). The amount of reject (brine) is also less. The feed to this one million U.S gallon/day plant by the conventional SWRO process is 602 m$^3$/h compared to only 322.45 m$^2$/h by the present invention for the ratio of 1: 0.485. As shown in Figure 9 also in Figure 17, the conventional SWRO plant is operated in two stages at recovery of 30% for the SWRO unit and 85% for its second brackish RO unit, utilizing in this case low pressure RO unit.

**Table 5. Summary of results of this optimal process NF$_{(2\ stages)}$ - SWRO$_{(2\ stages)}$ and conventional SWRO to produce one million gallon per day (3785 m$^3$/d or 158 m$^3$/h) of product water from Red Sea or Gulf Seawater**

| Parameter | NF$_{(2\ stages)}$ - SWRO$_{(2stages)}$ | Conventional SWRO | Ratio SWRO : Invention |
|---|---|---|---|
| Feed (m$^3$/h) | 292 | 602 | 1 : 0.485 |
| Product (m$^3$/h) Reject (m /h) | 158 | 158 | 1 : 1 |
| | 134 | 444 | 1 : 0.31 |
| Recovery (%)* | 54 | 26.2 | 1 : 2.06 |
| Energy (KWh/m$^3$) | 4.189 | 9.6 | 1 : 0.44 |
| *For the conventional SWRO plant the first stage recovery is 30% and second stage is 85% (see Figure 9. | | | |

In short, the present optimal process of this invention is of a much higher efficiency than that of the conventional SWRO process. Additionally, these many advantages are not limited to its application in the desalination of Gulf seawater (TDS 45000 ppm). Higher NF and SWRO recovery as well as an overall recovery up to 65% and higher can be achieved when this process is applied in the desalination of ocean seawater (TDS 35,000 ppm). The amount of feed, reject as well energy requirement are expected to be significantly far less for the desalination of ocean seawater feed than those values in Gulf seawater feed desalination. Higher recovery ratio, more yield can be obtained at lower TDS feed, when the SWRO plant is operated as part of the tri NF$_2$ - SWRO$_{2\ reject}$ - thermal.

It will be evident that there are numerous embodiments of this invention which, while not expressly set forth above, are clearly within the scope and sprit of the invention. The above description is, therefore, to be considered to be exemplary only, and the actual scope of the invention is to be determined solely from the appended claims. Although, similar claims can be made for making the NF product from the two stage NF unit as shown in Figure 1 or the SWRO reject wherein the SWRO unit is fed NF product, as make-up to thermal seawater desalination (MSFD, MED, VCD) plants. The claims in this invention are limited only to the optimal NF$_{(2\ stages)}$ - SWRO$_{(2\ stages)}$ and NF$_{(2\ stages)}$ - SWRO$_{(1-stage)}$ seawater desalination processes as shown in Figures 1, 2 or 3.

## Claims

1.  An optimal desalination process and apparatus which comprises passing saline water containing a high concentration of hardness scale forming ionic species, microorganisms, particulate matter and a high concentration of total dissolved solids through a two stage membrane nanofiltration (NF$_2$) unit with an energy recovery turbocharger (TC) unit in between the stages, supplemented as needed with a pressure boosting pump, to form from the combined NF product of the first and second NF stages a **first water product** having reduced content of said ionic species and from which is removed microorganisms, particulate matter and nearly all scale forming hardness ions and thereafter passing said first product through two stage SWRO (SWRO$_2$) with an energy recovery TC in between the stages, supplemented as needed with a pressure boosting pump, to produce from the combined product of two SWRO stages a final **second water product** (permeate) with potable qualities and a third water product of SWRO **brine discharge having increased salinity and drastically reduced scale forming hardness ions.**

2. A desalination process and apparatus which comprises passing seawater containing a high content of hardness scale forming Ionic species, microorganisms, particulate matter and total dissolved solids through a two stage membrane nanofiltration (NF$_2$) unit with an energy recovery TC unit in between the stages, supplemented as needed by a high pressure boosting pump, to form from the combined NF product of the first and second NF stages a **first water product** having a reduced content of said ionic species (TDS) and from which is removed microorganisms, particulate matter and nearly most of scale forming hardness ions and thereafter passing said first water product through a one stage seawater reverse osmosis unit, to form a **second water product (permeate) of potable quality** and a **third water product reject** having increased salinity but drastically reduced hardness, wherein the one stage SWRO unit has energy recovery turbocharger system, supplemented as needed with a high pressure booster pump, or turbocharger energy recovery system or pressure exchanger (PX) and also has the form and arrangement as shown in Figures 2 or 3.

3. An optimal desalination method and apparatus comprising as in Claims 1, 2 and 3, a dual fully integrated NF$_2$ units with energy recovery turbocharger in between, in which the first NF stage comprising a high pressure pump and NF unit to produce under pressure (P) of 25 $\pm$ 10 bar an NF product and NF reject, the NF reject constitutes the feed to the second stage NF after passing it through the turbocharger unit or booster pump or through a combination thereof to boost its pressure to 35 $\pm$ 10 bar, and the product from this second stage NF unit combined with the NF product from the first NF stage constitutes the **first water product.**

4. An optimal desalination system as in Claims 1, 2 and 3, utilizing NF membranes of moderate to high product flow and high rejection of scale forming hardness ions: SO$_4^=$, by over 90%, and other hardness ions in the order of 60 to 98%, while membranes in the second stage NF are also **characterized by** high rejection of scale forming hardness ions SO$_4^=$ up to 90% and other hardness ions also up to 60 to 98 % at moderate product flow.

5. An optimal desalination method and apparatus in which as in Claim 1, the first SWRO stage comprises a high pressure pump to deliver feed at P = 55 $\pm$ 10 bar to the SWRO unit to produce from it, a SWRO product and reject streams; passing the SWRO reject stream through a turbocharger or booster pump or combination thereof to boost its pressure, by the energy recovered from second SWRO stage reject, to 90 $\pm$ 10 bar before feeding it to the second stage SWRO unit to form from the combined product of first and second SWRO stages a SWRO product of potable quality and to form a third water product of SWRO reject from the brine of the second stage SWRO unit.

6. An optimal desalination system as in Claim 1 utilizing in the first stage SWRO a commercial SWRO membrane of the type used in conventional one stage SWRO plants, having a high salt rejection of 99.0% or more and can withstand pressure up to 70 bar, while high pressure tolerant up to 90 $\pm$ 10 bar, SWRO membrane is utilized in the second stage SWRO.

7. An optimal seawater desalination system as in Claim 1 utilizing pressure vessels in 1$^{st}$ and 2$^{nd}$ stage SWRO that can withstand pressure of up to 70 and 100 bar, respectively.

8. An optimal seawater desalination system as in Claim 2, wherein the one stage SWRO unit has the form and arrangement as shown in Figure 2.

9. An optimal seawater desalination system as in Claim 8, wherein the SWRO membrane and pressure vessels can tolerate pressure up to 85 bar.

10. An optimal seawater desalination system as in Claim 2, wherein the one stage SWRO has the form and arrangement as shown in Figure 3.

11. An optimal seawater desalination system as in Claim 10, wherein the SWRO membrane and pressure vessels can tolerate pressure up to 70 bar.

12. An optimal seawater desalination system as in Claims 10 and 11, wherein part of the SWRO reject (third water product of SWRO reject) is recycled back under its own pressure and is blended with seawater feed to form the feed to the NF unit as shown in Figure 3.

13. An optimal desalination system as in Claims 1 and 2 wherein said saline water comprises seawater.

14. An optimal desalination system as in Claim 13 wherein said seawater has a total dissolved solids content on the order of 2.0% - 5.0%.

15. An optimal desalination system as in Claim 13 wherein said seawater solution has a cation content on the order of 1.2% - 1.7%, an anion content on the order of 2.2% - 2.8%, a pH on the order of 7.9 - 8.2, comparable to a total dissolved solids content on the order of 2.0% - 5.0%.

16. An optimal desalination system as in Claim 15 further comprising said cation content including 700-2200 ppm of calcium and magnesium cations.

17. An optimal desalination system as in Claims 13 and 15 wherein, with respect to said seawater properties, calcium, magnesium, sulfate and bicarbonate ion content is reduced by the $NF_2$ unit on the order of 63% -99%, and total dissolved solids content is reduced by about 30% - 50%.

18. An optimal desalination system as in Claims 1 and 2 wherein said nanofiltration unit is operated at a temperature on the order of 15°C - 40 °C.

19. An optimal desalination system as in Claims 1 and 2 wherein said seawater reverse osmosis unit is operated at a temperature on the order of 15°C - 40 °C.

20. A desalination process as in Claims 1 and 2 wherein said **second water product** comprises potable water (SWRO permeate) and its product recovery ratio as compared to the seawater feed is on the order of 50% or better.

21. A desalination process as in Claim 2 wherein said **third water product** comprises SWRO reject of high salinity but drastically low in scale forming hardness ions of $SO_4^=$, $HCO_3^-$ , $Mg^{++}$ and $Ca^{++}$.

- TDS = 44000 ( ppm )
- Hardness Ions ( scale forming )
  $Ca^{++}$ = 481 ppm, $Mg^{++}$ = 1608 ppm, $SO_4^{=}$ = 3200 ppm, $HCO_3^{-}$ = 128 ppm
- Bacteria
- TSS

Seawater feed or make-up

Product Permeate / Distillate

At 35 % Recovery ( Low salt concentration )

Reject or Blow Down 65%

- TDS = 67692 ( ppm )
- Hardness Ions ( scale forming )
  $Ca^{++}$ = 740 ppm, $Mg^{++}$ = 2473 ppm, $SO_4^{=}$ = 4423 ppm, $HCO_3^{-}$ = 147 ppm
- Bacteria ( increased )
- TSS ( increased )

Fig. 1

**1. Scaling**
Caused by high concentration of hardness ions

**2. High Energy Consumption**
Caused by high concentration of TDS

**3. Corrosion**
Due to high concentration of TDS & Cl⁻ ions

**4. Fouling**
Caused by presence in seawater of :

Fig. 2

Fig. 3

Pretreatment

C. Thermal Unit*

\* Thermal unit equals MSFD or MED or VCD or RH unit

Fig. 4

EP 1 614 661 A1

Pretreatment

m³/d

* Thermal unit equals MSFD or MED or VCD or RH unit

# Fig. 5

**Fig. 6**

Fig. 7

EP 1 614 661 A1

Fig. 8

**Fig. 9**

Fig. 10

Fig. 11

**A. NF Unit**     **Recovery = 62%**     **Recovery = 35%**

196 m³/h     42 m³/h

**316 m³/h**

P = 35 ± 10 bar

**P = 25 ± 10 bar**
**TDS = 45,000 ppm**

Booster pump

**P = 24 ± 10 bar**  **120 m³/h**  P = 33 ± 10 bar

**Turbo Charger**

**78 m³/h**

**B. SWRO Unit**

**Recovery = 56%**    **Recovery = 35%**    **P = 170 m³/h**

**TDS = 28,500 ppm**
**238 m³/h**

133 m³/h
P = 90 ± 10 bar

1ˢᵗ Stage

37 m³/h

**P = 55 ± 10 bar**

1ˢᵗ Stage

Booster pump

**P = 54 ± 10 bar**  **105 m³/h**  P = 88 ± 10 bar

**Turbo Charger**

**68 bar**

**TDS = 64,770 ppm**    **TDS = 99,600 ppm**

**Fig. 12**

| 4.61 m³/hr<br>426000 μS/cm<br>28000 ppm | 3.3 m³/hr<br>57000 μS/cm<br>35000 ppm | 1.317 m³/hr<br>58300 μs/cm<br>40000 ppm | * Total<br>9.28 m³/hr<br>47500<br>μs/cm<br>32270 ppm |

7.29 m³/ hr
54117 ppm

3.99 m³/hr
69714 ppm

2.67 m³/hr
85230 ppm

* Total Recovery =78%, Final Product TDS = 32270 ppm, While for First Two Vessels Recovery 66.7 and TDS= 31170 ppm

## Fig. 13

Fig. 14

**Fig. 15**

## a.Permeate Flow

$y = -0.0253x^2 + 1.457x - 10.899$
$R^2 = 0.9995$

$y = -0.0091x^2 + 0.649x - 1.6238$
$R^2 = 1$

$y = -0.0038x^2 + 0.2062x + 5.5636$
$R^2 = 1$

$y = -0.0001x + 14.761$
$R^2 = 0.9996$

Feed Pressure (kg/cm$^2$)

Feed Temp.$^0$C)

Feed Flow (m$^3$/hr)

Feed TDS (ppm)

## b.Permeate Recovery

$y = -0.1219x^2 + 7.9338x - 52.377$
$R^2 = 1$

$y = -0.0467x^2 + 3.8218x - 3.3178$
$R^2 = 1$

$y = -4.1944x + 113.53$
$R^2 = 0.993$

$y = -0.001x + 107.24$
$R^2 = 0.9992$

## c.Permeate Conductivity

$y = 350.38x + 38260$
$R^2 = 0.9785$

$y = -794.59x + 56341$
$R^2 = 0.9991$

$y = 0.7826x + 12495$
$R^2 = 0.9987$

At T= 30 $^0$C & Feed Flow =14 m$^3$/hr

At P=25 kg/cm$^2$ & Feed Flow =14 m$^3$/hr

At T= 20$^0$C &P=25 kg/cm2

At P=25 kg/cm$^2$, T=25$^0$C & F.F=14m$^3$/hr

## Fig. 16

EP 1 614 661 A1

a. Flow (l/m)

Feed NF product from seawater

$P_{appl.}$

b. Recovery (%)

$P_{appl.}$

c. Conductivity (µS/cm)

Feed Pressure ($P_{appl.}$ bar)

Fig. 17

Fig. 18

European Patent Office

## EUROPEAN SEARCH REPORT

Application Number

EP 04 42 5501

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 329 425 A (TORAY INDUSTRIES) 23 July 2003 (2003-07-23) * the whole document * | 1-21 | C02F1/44 B01D61/02 B01D61/06 |
| X | AL-SOFI M A K ET AL: "Optimization of hybridized seawater desalination process" DESALINATION, ELSEVIER SCIENTIFIC PUBLISHING CO, AMSTERDAM, NL, vol. 131, no. 1-3, 20 December 2000 (2000-12-20), pages 147-156, XP004306347 ISSN: 0011-9164 * the whole document * | 1-21 | |
| A | DE 100 59 536 A (SIEMAG TRANSPLAN GMBH) 20 June 2002 (2002-06-20) * the whole document * | 1-21 | |
| A | TUREK M ET AL: "Hybrid membrane - thermal versus simple membrane systems" DESALINATION, ELSEVIER SCIENTIFIC PUBLISHING CO, AMSTERDAM, NL, vol. 157, no. 1-3, 1 August 2003 (2003-08-01), pages 51-56, XP004450568 ISSN: 0011-9164 * the whole document * | 1-21 | TECHNICAL FIELDS SEARCHED (Int.Cl.7) B01D C02F |
| A | VAN DER BRUGGEN B ET AL: "Distillation vs. membrane filtration: overview of process evolutions in seawater desalination" DESALINATION, ELSEVIER SCIENTIFIC PUBLISHING CO, AMSTERDAM, NL, vol. 143, no. 3, 10 June 2002 (2002-06-10), pages 207-218, XP004374878 ISSN: 0011-9164 * the whole document * | 1-21 | |

The present search report has been drawn up for all claims

| Place of search | Date of completion of the search | Examiner |
|---|---|---|
| The Hague | 5 January 2005 | Liebig, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 42 5501

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2005

| Patent document cited in search report | | Publication date | Patent family member(s) | | Publication date |
|---|---|---|---|---|---|
| EP 1329425 | A | 23-07-2003 | SG | 102030 A1 | 27-02-2004 |
| | | | US | 2003141250 A1 | 31-07-2003 |
| | | | EP | 1329425 A1 | 23-07-2003 |
| DE 10059536 | A | 20-06-2002 | DE | 10059536 A1 | 20-06-2002 |
| | | | ES | 2192966 A1 | 16-10-2003 |

For more details about this annex : see Official Journal of the European Patent Office, No. 12/82